# EUROPEAN PATENT APPLICATION

(11) **EP 1 596 569 A2**
(43) Date of publication of application: **16.11.2005**
(21) Application number: 05252857.7
(22) Date of filing: 10.05.2005
(51) Int. Cl.: H04N 1/32

(54) **Image forming device, data erasing method, a computer program and a computer readable storage medium**

(30) Priority: 10.05.2004 JP 2004140132; 02.05.2005 JP 2005134259; 02.05.2005 JP 2005134260
(71) Applicant: Ricoh Company, Tokyo 143-8555 (JP)
(72) Inventor: Kobayashi, Ayako, Tokyo (JP)
(74) Representative: Leeming, John Gerard

(57) **Abstract**

In an image forming device including hardware resources for image-formation processing and a program for executing an image-formation-related process, a mode judgment unit determines whether the image forming device is to be started in a clearing mode or a normal starting mode, the clearing mode being configured to erase, when the image forming device is started, data stored in a storage device of the image forming device. A process starting unit starts execution of the image-formation-related process in response to both a result of the determination of the mode judgment unit and an image-forming-device setup data. A data erasing unit erases the data stored in the storage device when the image forming device is started in the clearing mode.

## Description

The present invention relates to an image forming device, a data erasing method, and a recording medium.

In recent years, a multi-function peripheral (MFP) having image formation functions of the printer, the copier, the fax and the scanner contained in a housing is known as an image forming device. This image forming device comprises the operation panel, the printing unit and the image pickup unit which are contained in the housing, and further comprises four kinds of application programs corresponding to the printer, the copy, the fax and the scanner wherein any of the application programs are selectively activated to operate as the printer, the copier, the fax and the scanner.

The HD (Hard Disk) is a storage device in the above image forming device, and this storage device is accessed by any of the applications including the printer application, the copier application, the fax application and the scanner application, and used for image formation processing related to the printer, the copier, the fax or the scanner.

There is a possibility that the HD is taken away from the above image forming device so that the remaining data in the HD, such as the printed image data and documents, are analyzed. Or, there is a possibility that at the time of withdrawal or scrapping of the image forming device the remaining data in the HD are analyzed. Hence, the confidential information related to the user of the image forming device may leak out to the outside.

To eliminate the problem, there has been developed an image forming device which is designed to erase the data immediately after the data is used. See Japanese Laid-Open Patent Application No. 2002-082806, for example.

However, the user interfaces for the presentation of information related to the erasing of the HD data and for the setting of the device related to the erasing of the HD data in the conventional image forming device have been inadequate.

Moreover, during operation of the conventional image forming device, accessing the HD by any application among the printer application, the copies application, the fax application and the scanner application is permitted even at the time of execution of the processing to erase the HD data. For this reason, when the accessing of the HD by the application concerned interferes with the erasing processing to erase the HD data, the efficiency of the processing of the HD data erasing significantly deteriorates.

An object of the present invention is to provide an improved image forming device in which the above-described problems are eliminated.

Another object of the present invention is to provide an image forming device and a data erasing method in which an appropriate user interface for erasing the data stored in the storage device is provided.

Another object of the present invention is to provide an image forming device and a data erasing method in which the erasing of the data in the storage device can be performed efficiently.

In order to achieve the above-mentioned objects, the present invention provides an image forming device including hardware resources for image-formation processing and a program for executing an image-formation-related process, the image forming device comprising: a mode judgment unit determining whether the image forming device is to be started in a clearing mode or a normal starting mode, the clearing mode being configured to erase, when the image forming device is started, data stored in a storage device of the image forming device; a process starting unit starting execution of the image-formation-related process in response to both a result of the determination of the mode judgment unit and an image-forming-device setup data; and a data erasing unit erasing the data stored in the storage device when the image forming device is started in the clearing mode.

The above-mentioned image forming device may be configured so that the clearing mode comprises an only clearing mode which is configured to start execution of only processes needed to erase the data stored in the storage device.

The above-mentioned image forming device may be configured so that the clearing mode comprises a safe clearing mode which is configured to perform the erasing of the data also when the image-formation-related process is performed.

The above-mentioned image forming device may be configured so that, when the image forming device is started in the safe clearing mode, the image-formation-related process accesses a temporary storage medium instead of accessing the storage device.

The above-mentioned image forming device may be configured so that the clearing mode comprises an auto clearing mode which is configured to perform the erasing of the data automatically when a predetermined date and time is reached.

The above-mentioned image forming device may be configured so that the data erasing unit operates according to a program recorded in a computer-readable recording medium which is loaded in the image forming device.

The above-mentioned image forming device may be configured to further comprise an erasing-related information output unit outputting erasing-related information which is related to the erasing of the data stored in the storage device.

In order to achieve the above-mentioned objects, the present invention provides a data erasing method for an image forming device which includes hardware resources for image-formation processing and a program for executing an image-formation-related process, the data erasing method comprising steps of: determining whether the image forming device is to be started in a clearing mode or a normal starting mode, the clearing mode being configured to erase, when the image forming device is started, data stored in a storage device of the image forming device; starting execution of the image-formation-related process in response to both a result of the determination of the mode judgment unit and an image-forming-device setup data; and erasing the data stored in the storage device when the image forming device is started in the clearing mode.

The above-mentioned data erasing method may be configured so that the clearing mode comprises an only clearing mode which is configured to start execution of only processes needed to erase the data stored in the storage device.

The above-mentioned data erasing method may be configured so that the clearing mode comprises a safe clearing mode which is configured to perform the erasing of the data also when the image-formation-related process is performed.

The above-mentioned data erasing method may be configured so that, when the image forming device is started in the safe clearing mode, the image-formation-related process accesses a temporary storage medium instead of accessing the storage device.

The above-mentioned data erasing method may be configured so that the clearing mode comprises an auto clearing mode which is configured to perform the erasing of the data automatically when a predetermined date and time is reached.

The above-mentioned data erasing method may be configured to further comprise a step of outputting erasing-related information which is related to the erasing of the data stored in the storage device.

According to the image forming device and the data erasing method of the present invention, it is possible to provide an appropriate user interface for erasing the data stored in the storage device. Moreover, according to the image forming device and the data erasing method of the present invention, it is possible to perform the erasing of the data in the storage device efficiently.

Other objects, features and advantages of the present invention will be apparent from the following detailed description when reading in conjunction with the accompanying non-limiting drawings.
FIG. 1 is a block diagram showing the functional composition of the MFP.
FIG. 2 is a block diagram showing the hardware composition of the MFP.
FIG. 3 is a flowchart for explaining the processing of the MFP from the user setting to the starting.
FIG. 4 is a flowchart for explaining the processing of the MFP in the normal starting mode.
FIG. 5 is a diagram for explaining the operation of the MFP in the normal starting mode.
FIG. 6 is a diagram for explaining the option of the argument of "exec".
FIG. 7 is a diagram for explaining the option of the argument of "mount".
FIG. 8 is a flowchart for explaining the processing of the MFP in the HD-only clearing mode.
FIG. 9 is a diagram for explaining the operation of the MFP in the HD-only clearing mode.
FIG. 10 is a diagram showing an example of the option passed to a process from the "init".
FIG. 11 is a diagram showing an example of the transition of the display indication of the operation panel.
FIG. 12 is a flowchart for explaining the processing of the MFP in the HD-safe clearing mode.
FIG. 13 is a diagram for explaining the operation of the MFP in the HD-safe clearing mode.
FIG. 14 is a diagram showing an example of the environment variable passed to a process by the "init".
FIG. 15 is a flowchart for explaining the processing of the MFP in the HD-auto clearing mode.
FIG. 16 is a diagram showing an example of the transition of the display indication of the operation panel.
FIG. 17 is a diagram for explaining the operation of the MFP in the HD-auto clearing mode.
FIG. 18 is a diagram for explaining the operation of the MFP after the HD clearing process is performed.
FIG. 19 is a diagram for explaining the notification of the HD clearing mode to a client.
FIG. 20 is a diagram showing an example of the information related to the HD clearing process displayed on the web browser of the client.
FIG. 21 is a diagram showing an example of the e-mail related to the HD clearing process which is transmitted to the client.
FIG. 22 is a diagram for explaining the operation of the MFP in the HD-only clearing mode.
FIG. 23 is a diagram for explaining the operation of the MFP in the HD-only clearing mode.
FIG. 24 is a diagram for explaining the operation of the MFP in the HD-only clearing mode.
FIG. 25 is a diagram showing an example of the information related to the usable functions displayed on the web browser of the client.
FIG. 26 is a diagram showing an example of the e-mail related to the usable functions which is transmitted to the client.
FIG. 27 is a diagram showing an example of the function button related to the usable functions displayed on the client.
FIG. 28 is a diagram showing the composition of a model common SD memory card.
FIG. 29 is a diagram showing the composition of a model common SD memory card.
FIG. 30 is a diagram for explaining the operation of the MFP in the normal starting mode.
FIG. 31 is a diagram for explaining the operation of the MFP in the HD-only clearing mode.
FIG. 32 is a diagram for explaining the operation of the MFP in the HD-safe clearing mode.
FIG. 33 is a diagram showing the operation panel which is used to specify the date and time.
FIG. 34 is a diagram for explaining the operation of the MFP in the HD-auto clearing mode.
FIG. 35 is a diagram showing an example of the MFP setting file which makes the setting of the option unnecessary.

A description will now be given of the preferred embodiments of the invention with reference to the accompanying drawings.

In the following, a multi-function peripheral (MFP) having the functions of the copier, the fax, the printer and the scanner and having the function of image formation to form an image will be explained as the image forming device in which the present invention is embodied.

Hereinafter, a process is a unit for a kernel to manage a program when executing the program. A process may be called a thread or a job. This process can be classified into the system process and the user process containing the application.

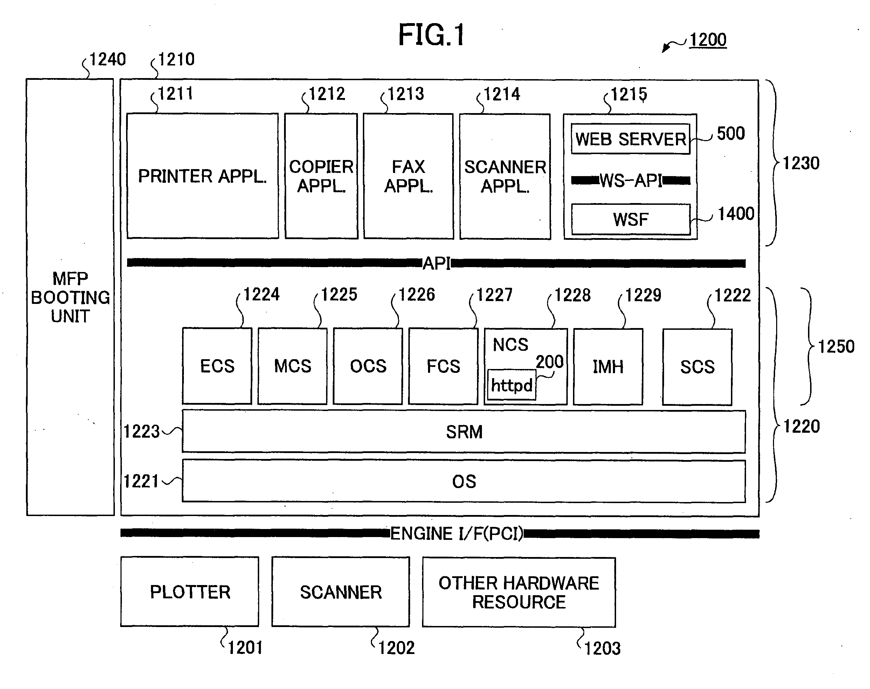

FIG. 1 shows an example of the functional composition of the image forming device (called the MFP) 1200. FIG. 1 is a block diagram showing the functional composition of the MFP.

As shown in FIG. 1, the MFP 1200 comprises the plotter 1201, the scanner 1202, and the hardware resources 1203, such as facsimile. The MFP 1200 further comprises the software group 1210 containing the platform 1220 and the application 1230, and the MFP booting unit 1240.

The MFP booting unit 1240 is first activated by the power up of the MFP 1200. The MFP booting unit 1240 starts the platform 1220 and the application 1230. The "init" program (called the "init") 10 is included in the MFP booting unit 1240. The "init" 10 determines the mode to start the MFP 1200 by making reference to the value of the HD clearing flag of NVRAM 208.

The "init" 10 corresponds to a mode judgment unit and a process starting unit. When the value of the HD clearing flag (1 byte) of NVRAM is 1, the "init" 10 starts the MFP 1200 as the HD-only clearing mode. When the value of the HD clearing flag is 2, the MFP 1200 is started as the HD-safe clearing mode. When the value of the HD clearing flag is 3, the MFP 1200 is started as the HD-auto clearing mode. The MFP 1200 is ,started as the normal starting mode if the value of the HD clearing flag is except 1, 2, and 3. Each control service which constitutes each application and/or platform which is started in each mode will be described later.

In the following, for simplification of explanation, the HD-only clearing mode and the HD-auto clearing mode are combined, and it is also called the HD-only package clearing mode.

The "init" 10 performs execution of only the "exec" and "mount" in the necessary minimum number at the time of the HD-only clearing mode.

The platform 1220 comprises the following modules: the control service 1250 which generates the acquisition request of hardware resources; the SRM (System Resource Manager) 1223 which manages hardware resources and arbitrates the acquisition request from the control service 1250; and the OS (Operating System) 1221.

The control service 1250 comprises the plurality of services modules, and, in the case of the normal starting mode, it comprises the following modules: the SCS (System Control Service) 1222; the ECS (Engine Control Service) 1224; the MCS (Memory Control Service) 1225; the OCS (Operation panel Control Service) 1226; the FCS (Fax Control Service) 1227; the NCS (Network Control Service) 1228; and the IMH (Imaging Memory Handler) 1229.

The OS 1221 is the operating system, such as UNIX. The SRM 1223 performs control of the system and management of the resources in association with the SCS 1222. The SRM 1223 arbitrates and controls the execution of the system and resources in response to the demand sent from the upper layer using the hardware resources of the engine part of the scanner or the plotter, the memory, the HD file, and the host I/O (the Centronics I/F, the network I/F, the IEEE1394 1/F, the RS232C 1/F, etc.).

The SCS 1222 performs the plurality of functions of application management, operation panel control, system screen indications, LED indications, resource management, and interruption application control.

The ECS 1224 controls the engine part of the plotter 1201, the scanner 1202, and other hardware resources 1203. The MCS 1225 performs memory control.

The OCS 1226 is a module which controls the operation panel 1310 which is used as the information transmission means between the operator and the main part control. The OCS 1226 carries out the processing which notifies the operator's key stroke event to the main part control, the processing which provides the library function for each application to create the GUI, the processing which manages the created GUI information for each application, and the processing which performs indication and reflection of the operation panel 1310.

The operation panel 1310 corresponds to the erasing-related information output unit which outputs the erasing-related information which is the information related to the HD clearing of the data stored in the HD 1303, and a time setting unit which sets up the date and time in the auto clearing mode.

The FCS 1227 provides the API (Application Program Interface) for performing the facsimile transmission and reception of each application layer of the system controller using the PSTN/ISDN network, the registration/retrieval of the various facsimile data managed by the BKM (backup SRAM), the facsimile reading, the facsimile reception printing, and the integrated transmission and reception.

The NCS 1228 is a module group for providing the service which can be used in common to the application which requires the network I/O. The process of NCS 1228 acts as the agent that distributes the data received from the network through the corresponding protocol over the applications, and transmits the data from the applications to the network through the corresponding protocol. For example, the process of NCS 1228 controls data communications of http (hypertext transfer protocol) between the MFP and the clients connected via the network, by using httpd (hypertext transfer protocol daemon) 200. The processing part corresponding to the Web service specified by the HTTP request header may be started by a function call, and the processing result by the Web service may be notified to the network equipment by a HTTP response. The Web service is provided according to the message described in XML, for example.

The IMH 1229 carries out the mapping of the image data from the virtual-memory area (user virtual space) to the physical memory. Upon starting of a process, a system call is performed and the processing which carries out the mapping of the virtual-memory area for the process and the relieving of the virtual-memory area to which the mapping is performed at the time of termination of the process.

The application 1230 comprises the printer application 1211 for the printer, the copier application 1212 for the copier, the fax application 1213 for the facsimile, the scanner application 1214 for the scanner, and the Web service processing application 1215 which is the Web service application. A new application may also be loaded via the network connected with the NCS 1228. In addition, each application may be added or deleted.

The Web service processing application 1215 comprises the following: the Web server 500 which provides the Web service by receiving the HTTP request which requires the Web service, and transmitting the HTTP response; and the Web service function (WSF) 1400 which performs the given processing through the API (Application Program Interface) using the control service 1250, and provides the processing result as the Web service through the WS-API (Web Service Application Program Interface).

Accordingly, the MFP 1200 intensively carries out the image formation processing which is needed in common by each application on the platform 1220.

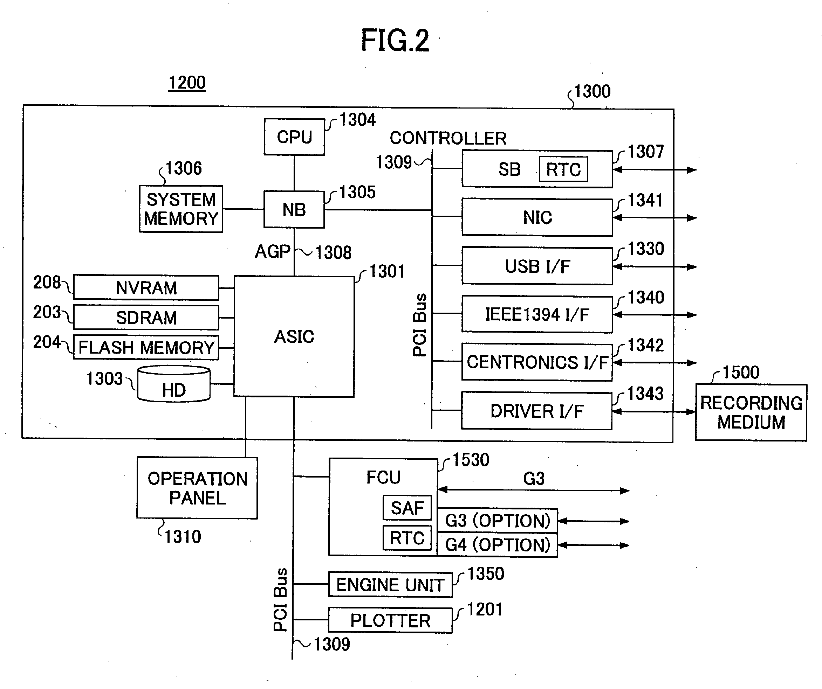

Next, the hardware compositions of the MFP 1200 will be explained. FIG. 2 is a block diagram showing the hardware composition of the MFP 1200.

As shown in FIG. 2, the MFP 1200 comprises the operation panel 1310, the fax control unit (FCU) 1530, the engine part 1350 (with the scanner 1202 connected), the plotter 1201, and the ASIC 1301 of the controller 1300, which are interconnected by the PCI (Peripheral Component Interconnect) bus 1309.

In the controller 1300, the NVRAM 208, the SDRAM 203, the flash memory 204, and the HD 1303 are connected to the ASIC 1301, and the ASIC 1301 and the CPU 1304 are connected through the NB 1305 of the CPU chip set. The CPU 1304 performs control of the whole MFP 1200.

The NB 1305 is a bridge for connecting the CPU 1304 to the driver I/F 1343, the ASIC 1301, the system memory 1306, the SB 1307, the NIC (Network Interface Card) 1341, the USB (Universal Serial Bus) interface 1330, the IEEE1394 interface 1340, and the Centronics interface 1342.

The system memory 1306 is used as a memory for image drawing of the MFP. The SB 1307 is a bridge for connecting the NB1305, the ROM, the PCI device and the peripheral device. The ASIC 1301 is an IC for the image-processing use which contains the hardware elements for image processing.

The driver I/F 1343 is the interface used for reading a program or application from the recording medium 1500 which is inserted in the MFP 1200 and stores the programs or applications therein, and for loading the read program or application into the MFP 1200. Examples of the recording medium 1500 may include an SD memory card, a SmartMedia card, a multimedia card and a CompactFlash.

In the following, for simplification of explanation, it is assumed that an SD memory card is used as a typical example of the recording medium 1500. However, the present invention is not limited to this embodiment. In the following, the SD memory card is called the SD memory card 1500.

The SDRAM 203 is the non-volatile memory which is accessed by any of the control services constituting the above-mentioned platform or applications, instead of the HD, when the HD clearing process is performed.

The NVRAM 208 is the non-volatile memory which holds, for example, the HD clearing flag and the setting file (the MFP setting file) 20 of the MFP 1200.

The flash memory (also called the flash ROM) 204 is the memory which stores the respective control services, constituting the above-mentioned platform and applications, and the respective programs of the SRM 1223 therein.

The HD 1303 is the storage device in which image data, font data, forms, and documents are accumulated.

The operation panel 1310 is the operation/indication unit which receives the input operations from the operator or user and provides the operator or user with the display indication of the operational messages as the user interface.

The ASIC 1301 includes the RAM interface for connecting the NVRAM 208 and the SDRAM 203, and the hard disk interface for connecting the HD 1303. When outputting or inputting image data to the storage device, the output or input destination is changed to one of the RAM interface or the hard disk interface.

The AGP 1308 is the bus interface for the graphics accelerator card which is proposed in order to accelerate the graphic operation.

Next, the operation of the MFP 1200 will be explained. First, the operation in which the user sets up the MFP 1200 using the operation panel 1310 and the booting of the MFP 1200 is performed will be explained.

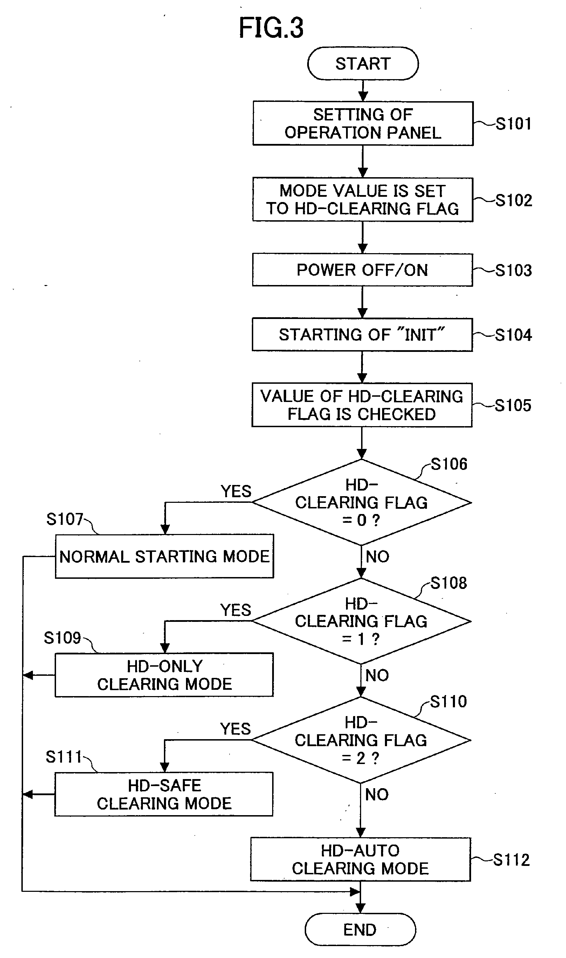

FIG. 3 is a flowchart for explaining the processing of the MFP 1200 from the setting of the user to the starting of the MFP 1200.

At step S101, the setting of the operation panel is performed. This setup is performed from the maintenance mode. The setup includes setting of each mode which indicates operation at the time of the HD clearing process, setting of the HD clearing date and time in the case of the HD-auto clearing mode, and setting of whether the power supply is turned off or the MFP is restarted after the HD clearing process.

In the present embodiment, the power OFF/ON means a restart, and the power OFF means that the power is turned off and nothing is performed further.

At step S102, the value corresponding to the mode set to NVRAM at step S101 is set to the HD clearing flag. This value is set to 0 when the normal starting mode is selected. It is set to 1 when the HD-only clearing mode is selected. It is set to 2 when the HD-safe clearing mode is selected. And it is set to 3 when the HD-auto clearing mode is selected.

At step S103, the MFP 1200 is powered off and on. This is the restart of the MFP 1200 and the contents of the setting of the NVRAM are reflected at the time of starting.

At step S104, the "init" starts the MFP 1200. At step S105, the check of the HD clearing flag of the NVRAM is performed. The processing is branched depending on the checking result.

At step S106, it is determined whether the HD clearing flag is 0. When it is not 0, the processing is transferred to step S108.

When it is 0, the processing of the normal starting mode is performed at step S107.

At step S108, it is determined whether the HD clearing flag is 1. When it is not 1, the processing is transferred to step S110.

When it is 1, the processing of the HD-only clearing mode is performed at step S109.

At step S 110, it is determined whether the HD clearing flag is 2. When it is 2, the processing of the HD-safe clearing mode is performed at step S111.

Since the HD clearing flag is 3 when it is not 2, the processing of the HD-auto clearing mode is performed at step S 112.

The above-mentioned step S106, step S108, and step S110 correspond to a mode judgment step.

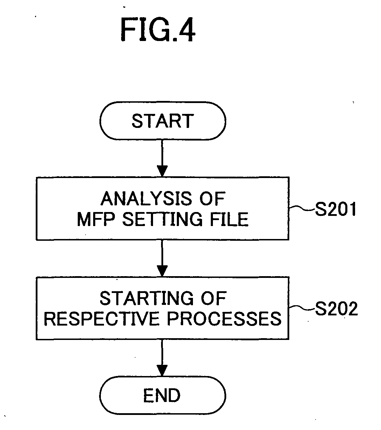

Next, an example of the operation of the MFP 1200 in the normal starting mode will be explained. FIG. 4 is a flowchart for explaining the processing of the MFP 1200 in the normal starting mode.

At step S201, the "init" 10 analyzes the MFP setting file. At step S202, the "init" 10 starts each process. This step S202 corresponds to a process starting step.

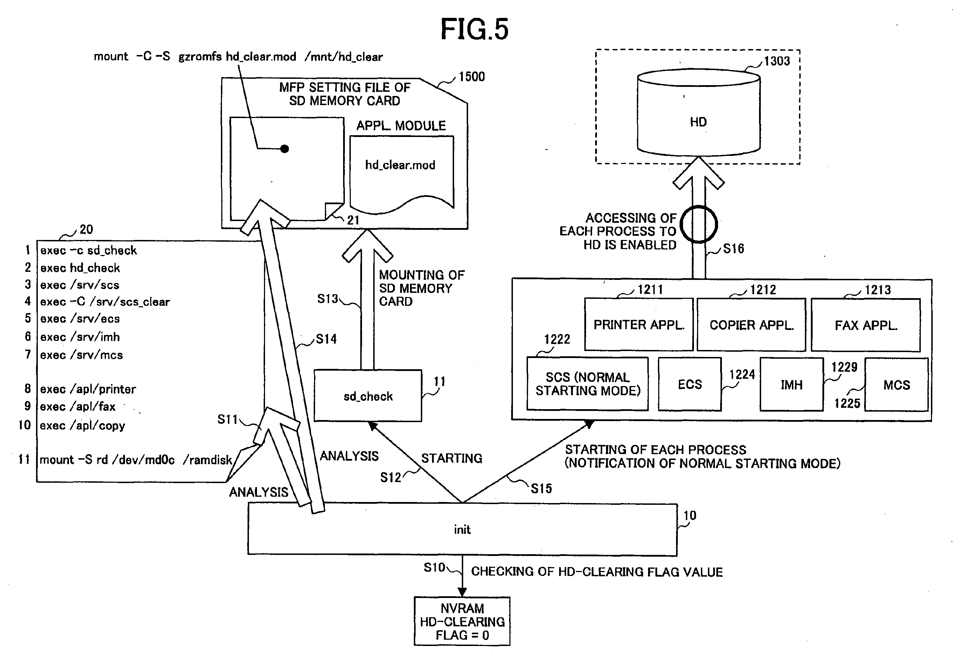

The operation of the MFP in the normal starting mode will be explained using FIG. 5. FIG. 5 is a diagram for explaining the operation of the MFP in the normal starting mode.

At step S10, the "init" 10 checks the value of the HD clearing flag of NVRAM 208. The "init" 10 starts the MFP 1200 in the normal starting mode if the value of the HD clearing flag is 0.

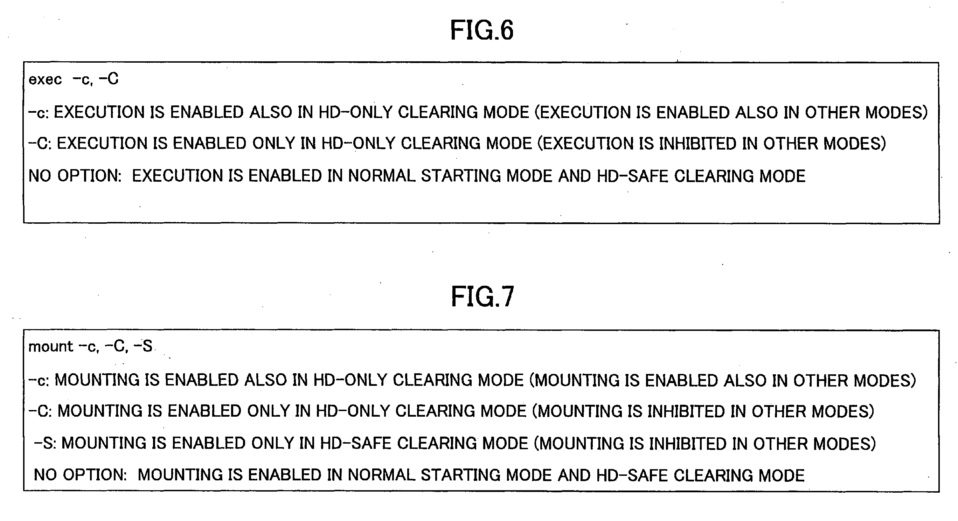

Here, the option of the argument of "exec" described in the MFP setting file will be explained using FIG. 6. FIG. 6 is a diagram for explaining the option of the argument of "exec".

As shown in FIG. 6, when the argument of "exec" is "-c" the "init" 10 enables execution of the module concerned also in the HD-only package clearing mode. In the case of other modes, the execution is also enabled.

When the argument of "exec" is "-C", the "init" 10 enables execution of the module concerned only in the HD-only package clearing mode. In the case of other modes, the execution is inhibited.

When there is no option, the "init" 10 enables the execution in the case of the normal starting mode and the HD-safe clearing mode.

Next, the option of the argument of "mount" described in the MFP setting file will be explained using FIG. 7. FIG. 7 is a diagram for explaining the option of the argument of "mount".

As shown in FIG. 7, when the argument of "mount" is "-c", the "init" 10 enables mounting of the module concerned also in the HD-only package clearing mode. In the case of other modes, the mounting is also enables.

When the argument of "mount" is "-C", the "init" 10 enables mounting of the module concerned only in the HD-only package clearing mode. In the case of other modes, the mounting is inhibited.

When the argument of "mount" is "-S", the "init" 10 enables mounting of the module concerned only in the HD-safe clearing mode. In the case of other modes, the mounting is inhibited.

When there is no option, the "init" 10 enables the mounting in the case of the normal starting mode and the HD-safe clearing mode.

Referring back to FIG. 5, at step S11 following step S10, the "init" 10 analyzes the MFP setting file 20.

Following step S11, at step S 12, the "init" 10 performs "exec" of the 1st line described in the MFP setting file 20, and starts execution of the "sd_check" module (called the "sd_check") 11.

Although not illustrated in FIG. 5, the "init" 10 performs "exec" of the 2nd line described in the MFP setting file 20, and starts the "hd_check" module which performs the checking and mounting of HD 1303.

At step S13 following step S12, the "sd_check" 11 mounts the SD memory card 1500.

At step S 14 following step S 13, the "init" 10 analyzes the SD memory card setting file 21.

On the other hand, at step S 15, the "init" 10 performs execution of each process of the 3rd line, the 5th line, the 6th line, the 7th line, the 8th line, the 9th line, and the 10th line which are described in the MFP setting file 20, and starts execution of the SCS 1222 for the normal starting mode, the ECS 1224, the IMH 1229, the MCS 1225, the printer application 1211, the copier application 1212, and the facsimile application 1213.

At step S16 following step S15, each process accesses the HD 1303 and performs the processing concerned.

In FIG. 5, the number of the processes to be started is decreased when compared with that of FIG. 1, for simplification of explanation. However, this does not restrict implementation of the present invention. The same is applicable to the following description.

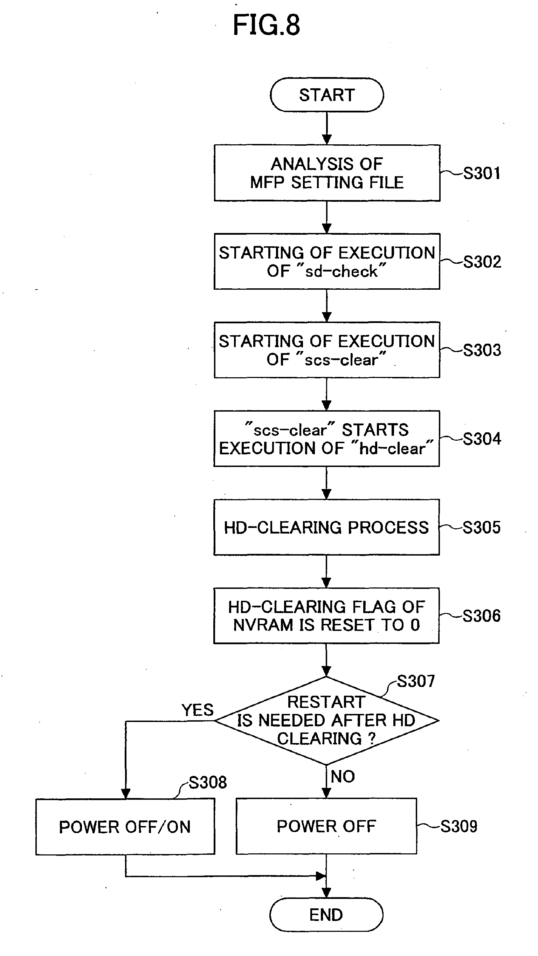

Next, the operation of the MFP 1200 in the HD-only clearing mode will be explained. FIG. 8 is a flowchart for explaining the processing of the MFP 1200 in the HD-only clearing mode.

At step S301, the "init" 10 analyzes the MFP setting file. At the following step S302, the "init" 10 starts the "sd_check" 11.

At the following step S303, the "init" 10 starts the "scs_clear" module (called the "scs_clear") 12 which is the SCS for the HD-only clearing mode.

At the following step S304, the "scs_clear" 12 starts the "hd_clear" 13 which is the HD clearing process module. And the HD clearing process of HD 1303 is carried out at step S305.

At the following step S306, the HD clearing flag of NVRAM is reset to 0. The "hd_clear" 13 corresponds to a data erasing unit. The step S305 corresponds to a data elimination step.

At step S307, it is determined whether a restarting is needed after the HD clearing process. When the restarting is needed, the restarting is performed at step S308. When the restarting is not needed, the power is turned off at step S309.

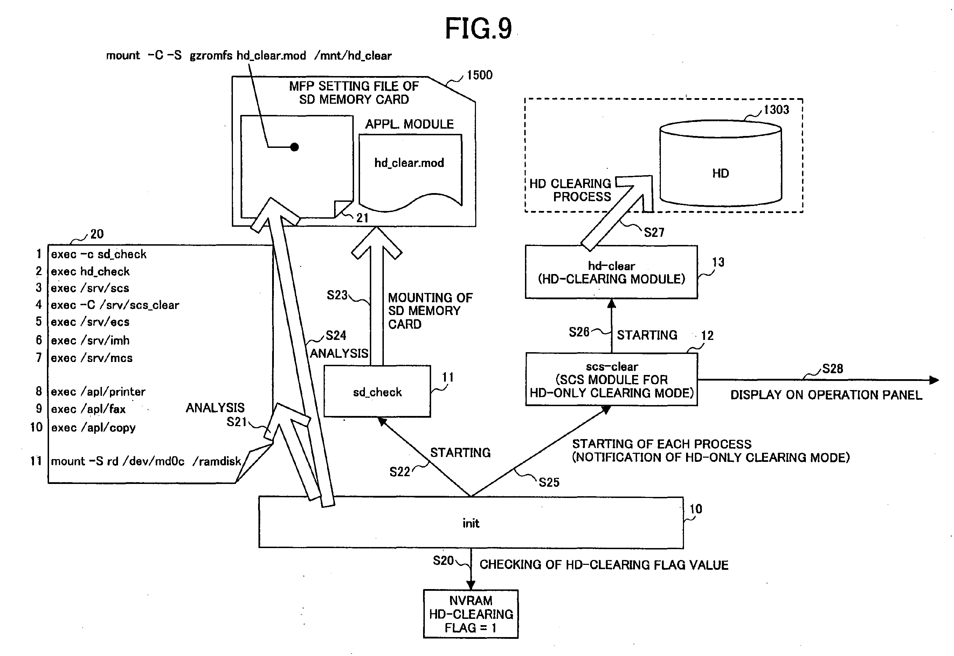

Next, an example of the operation of the MFP 1200 in the HD-only clearing mode will be explained using FIG. 9. FIG. 9 is a diagram for explaining the operation of the MFP in the HD-only clearing mode.

At step S20, the "init" 10 checks the value of the HD clearing flag of NVRAM 208. The "init" 10 starts the MFP 1200 by the HD-only clearing mode if the value of the HD clearing flag is 1.

At step S21 following step S20, the "init" 10 analyzes the MFP setting file 20.

Following step S21, at step S22, the "init" 10 performs "exec" of the 1st line described in the MFP setting file 20, and starts execution of the "sd_check" 11.

At step S23 following step S22, the "sd_check" 11 mounts the SD memory card 1500.

Following step S23, at step S24, the "init" 10 analyzes the SD memory card setting file 21, and performs the mounting.

On the other hand, at step S25, the "init" 10 performs "exec" of the 4th line described in the MFP setting file 20, and starts execution of the "scs_clear" 12. The "init" 10 passes a mode of operation as an option at the time of starting to the process started at step S25.

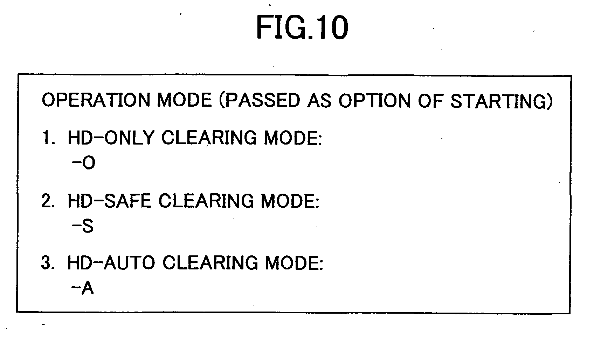

Next, an example of the option passed to a process from the "init" 10 is shown in FIG. 10. FIG. 10 is a diagram showing an example of the option passed to a process from the "init".

As shown in FIG. 10, in the case of the HD-only clearing mode, the "init" 10 starts a process by setting the option of the argument to "-O".

In the case of the HD-safe clearing mode, the "init" 10 starts a process by setting the option of the argument to "-S". In the case of the HD-auto clearing mode, the "init" 10 starts a process by setting the option of the argument to "-A". In the case of the normal starting mode, the "init" 10 starts a process without setting the option of the argument.

Referring back to FIG. 9, the "scs_clear" 12 starts the "hd_clear" 13 at step S26 following step S25. At step S27 following step S26, the "hd_clear" 13 performs the HD clearing of the data stored in HD 1303.

On the other hand, the "scs_clear" 12 displays the information related to the HD clearing of HD 1303 on the operation panel 1310.

In this embodiment, the "scs_clear" 12 performs the display indication and reflection processing of the operation panel 1310. Alternatively, it may be configured so that the "init" 10 starts the service which offers a part of the function provided by the OCS 1226, and this service serves to display the information related to the HD clearing of HD 1303 on the operation panel 1310.

In the following, it is assumed that in the mode in which the "scs_clear" 12 is started, the "scs_clear" 12 performs the display indication and reflection processing of the operation panel 1310.

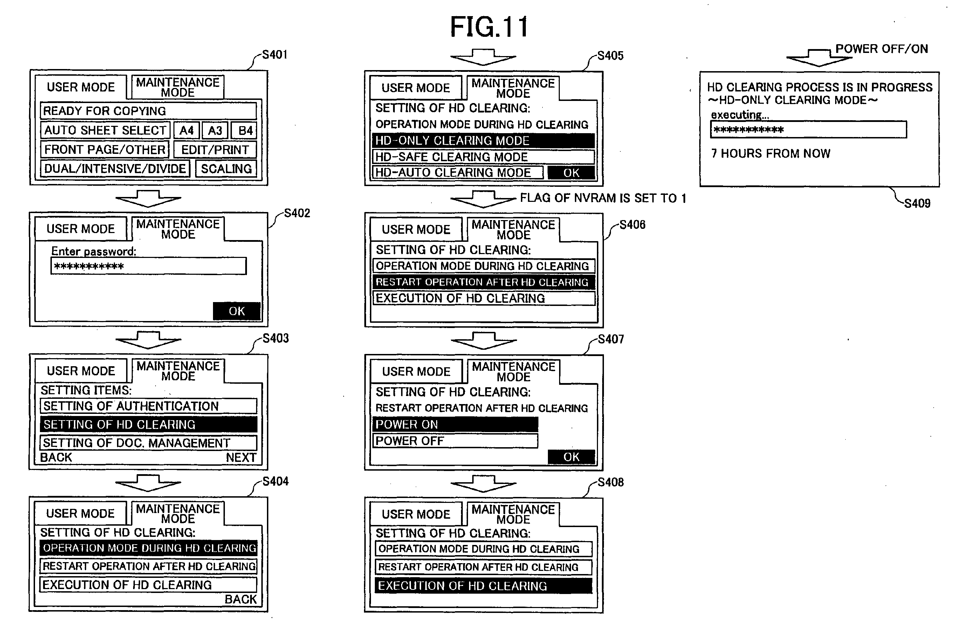

Next, an example of the transition of the display indication of the operation panel 1310 will be explained using FIG. 11. FIG. 11 shows an example of the transition of the display indication of the operation panel.

As shown in FIG. 11, step S401 shows the normal display screen. Step S402 shows the authentication screen in the maintenance mode. In this authentication screen, the user is required to enter the password required for the maintenance.

Step S403 shows the maintenance screen. If the user chooses the HD clearing process setup in this screen, the screen is changed to the screen of step S404. Step S404 shows the HD clearing process setting screen.

If the user chooses the operation mode during HD clearing process in this screen, the screen is changed to the screen of step S405. Step S405 shows the operation mode setting screen at the time of the HD clearing process.

The MFP 1200 will set the value of the HD clearing flag of NVRAM 208 as 1, if the HD-only clearing mode is chosen by the user. The MFP 1200 will set the value of the HD clearing flag of NVRAM 208 as 2, if the HD-safe clearing mode is chosen by the user. The MFP 1200 will set the value of the HD clearing flag of NVRAM 208 as 3, if the HD-auto clearing mode is chosen by the user. The power of the MFP 1200 is turned off and on after the value of the HD clearing flag of NVRAM 208 is set.

By performing such operation, the MFP 1200 can perform the HD clearing process of HD 1303 in the mode selected by the user.

If the user chooses the HD-only clearing mode in the screen of step S405, the screen is changed to the screen of step S406. If the user chooses the restart operation after the HD clearing process in the screen of step S406, the screen is changed to the screen of step S407.

The MFP 1200 will set the value of the restart operation flag after the HD clearing process of NVRAM 208 to 1, if the power ON is chosen by the user. The MFP 1200 will set the value of the restart operation flag after the HD clearing process of NVRAM 208 to 0, if the power OFF is chosen by the user.

When the user chooses the power ON in the screen of step S407, the screen is changed to the screen of step S408. When the user chooses the HD clearing process execution in this screen, the screen is changed to the screen of step S409.

As shown in the screen of step S409, the "scs_clear" 12 displays the information related to the HD clearing of HD 1303 on the operation panel 1310, such as the in-progress situation of the HD clearing process, the advancing situation of the HD clearing process, the remaining time, and the mode of operation of the MFP 1200.

As shown in FIG. 11, by displaying the information related to the HD clearing of HD 1303 on the operation panel 1310, the user of the MFP 1200 can recognize how much time is needed for finishing the HD clearing of HD 1303, for example. In addition, the user can recognize in which mode the MFP 1200 has started currently. Simultaneously, since the HD clearing of HD 1303 is now in progress, the user can understand that the power supply of the MFP 1200 must not be turned off.

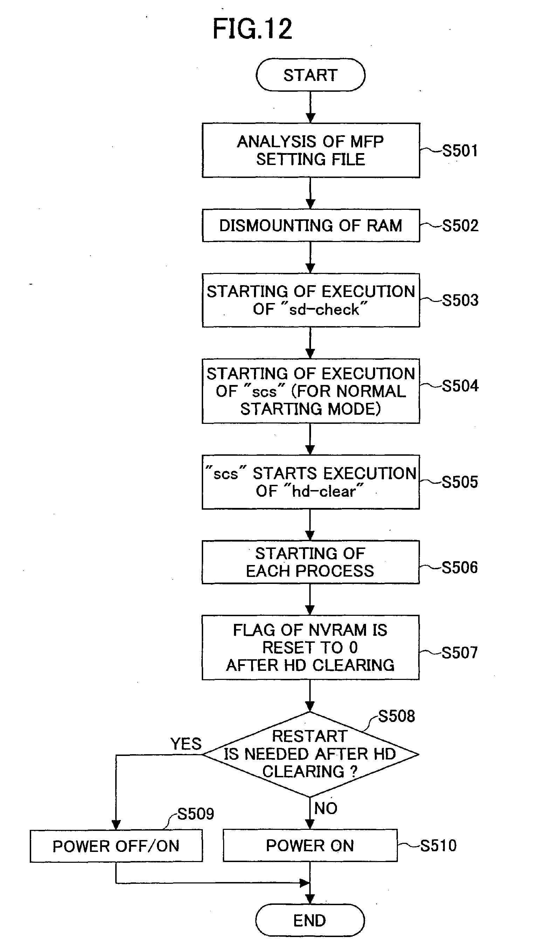

Next, an example of the operation of the MFP 1200 in the HD-safe clearing mode will be explained. FIG. 12 is a flowchart for explaining the processing of the MFP in the HD-safe clearing mode.

At step S501, the "init" 10 analyzes the MFP setting file. At step S502, the "init" 10 mounts the RAM disk.

At the following step S503, the "init" 10 starts the "sd_check" 11. At step S504, the "init" 10 starts the SCS 1222.

At step S505, the SCS 1222 starts the "hd_clear" 13 which is the HD clearing process module.

At step S506, the "init" 10 starts each process. At the following step S507, the restart operation flag after the HD clearing process of NVRAM is checked.

At step S508, it is determined whether a restarting is needed after the HD clearing process. When the restarting is needed, a restart of the MFP is performed at step S509. When the restarting is not needed, the power of the MFP is turned off at step S510.

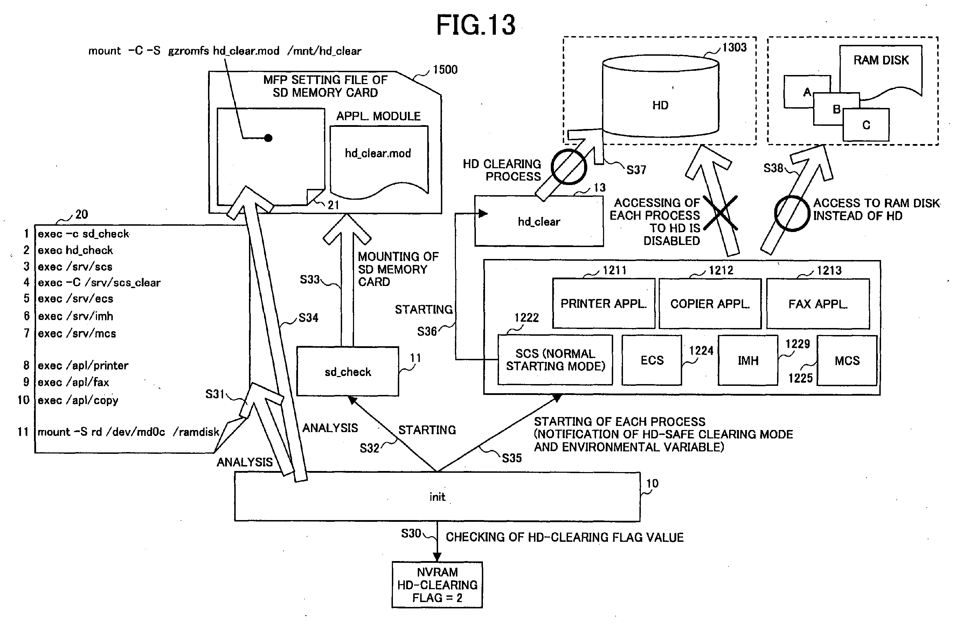

Next, the operation of the MFP 1200 in the HD-safe clearing mode will be explained using FIG. 13. FIG. 13 is a diagram for explaining the operation of the MFP in the HD-safe clearing mode.

At step S30, the "init" 10 checks the value of the HD clearing flag of NVRAM 208. The "init" 10 will start the MFP 1200 by the HD-safe clearing mode, if the value of the HD clearing flag is 2.

At step S31, the "init" 10 analyzes the MFP setting file 20 following step S30.

At step S32 following step S31, the "init" 10 performs "exec" of the 1st line described in the MFP setting file 20, and starts the "sd_check" 11.

Although not illustrated in FIG. 13, the "init" 10 performs "exec" of the 2nd line described in the MFP setting file 20, and starts the hd_check module which performs the checking and mounting of HD 1303.

At step S33 following step S32, the "sd_check" 11 mounts the SD memory card 1500.

At step S 34 following step S33, the "init" 10 analyzes the SD memory card setting file 21, and performs the mounting.

On the other hand, at step S35, the "init" 10 performs execution of the 3rd line, the 5th line, the 6th line, the 7th line, the 8th line, the 9th line, and the 10th line which are described in the MFP setting file 20, and starts the SCS 1222 for the normal starting mode, the ECS 1224, the IMH 1229, the MCS 1225, the printer application 1211, the copier application 1212, and the fax application 1213. Further, the "init" 10 starts execution of the 11th line described in the MFP setting file 20, and performs the mounting of the RAM disk of SDRAM 203.

The "init" 10 passes the mode of operation as the option at the time of starting, to the process started at step S35, and passes the device (the RAM disk of HD 1303 or the SDRAM 203) to be accessed as the local storage device as an environment variable.

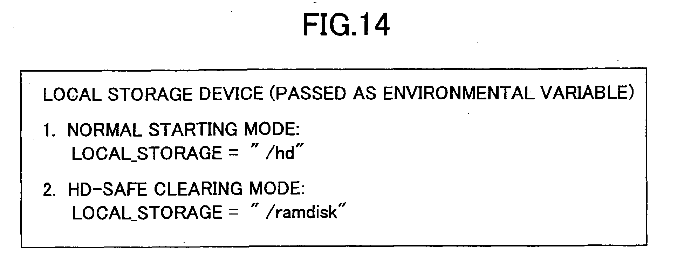

Next, an example of the environment variable passed to a process by the "init" 10 will be explained using FIG. 14. FIG. 14 is a diagram showing an example of the environment variable passed to a process by the "init".

As shown in FIG. 14, in the case of the normal starting mode, the "init" 10 passes "/hd" which indicates the HD 1303, as the environment variable LOCAL_STORAGE, and starts the process. In the case of the HD-safe clearing mode, the "init" 10 passes "/ramdisk" which indicates the RAM disk of SDRAM 203, as the environment variable LOCAL_STORAGE, and starts the process.

Referring back to FIG. 13, the SCS 1222 starts the "hd_clear" 13 at step S36 following step S35.

At step S37 following step S36, the "hd_clear" 13 performs the HD clearing of the data stored in HD 1303. The process to which the "/ramdisk" is passed as the environment variable LOCAL_STORAGE and started by the "init" 10 at the step S35, accesses the RAM disk instead of accessing the HD 1303, and performs the processing related to the image formation of the printer, the copier, the facsimile and the scanner.

As shown in FIG. 13 and FIG. 14, if the HD-safe clearing mode is used, it is possible to perform the image forming processing related to any of the printer, the copier or the facsimile even when the HD clearing process is in progress.

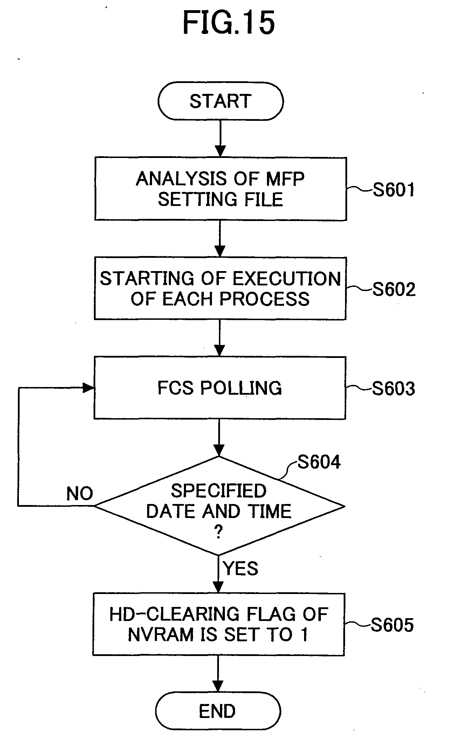

Next, an example of the operation of the MFP 1200 in the HD-auto clearing mode will be explained. FIG. 15 is a flowchart for explaining the processing of the MFP in the HD-auto clearing mode.

At step S601, the "init" 10 analyzes the MFP setting file. At step S602, the "init" 10 starts each process. At the following step S603, the FCS polling is performed.

Next, at step S604, it is determined whether the specified date and time is reached. When the specified date and time is not yet reached, the processing of step S603 is performed again. Therefore, the polling will be repeated until the specified date and time is reached.

When the specified date and time is reached, the HD clearing flag of NVRAM is set to 1 at step S605.

Subsequently, the processing which is the same as the processing of steps S307 to S309 (refer to FIG. 8) will be performed.

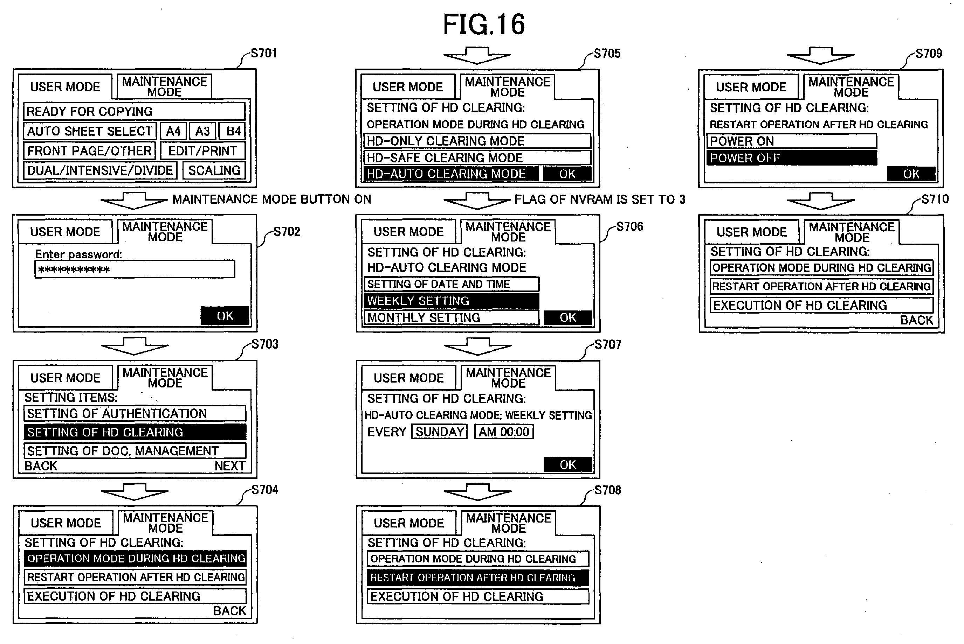

Next, an example of the transition of the display indication of the operation panel 1310 will be explained using FIG. 16. FIG. 16 shows the example of the transition of the display indication of the operation panel.

As shown in FIG. 16, step S701 shows the normal display screen. Step S702 shows the authentication screen in the maintenance mode. The user is requested to enter the password required for the maintenance in this authentication screen.

Step S703 shows the maintenance screen. If the user chooses the HD clearing process setup in this screen, the screen is changed to the screen of step S704.

Step S704 shows the HD clearing process setting screen. If the user chooses the "operation mode during the HD clearing process" in this screen, the screen is changed to the screen of step S705.

Step S705 shows the "operation mode during the HD clearing process" setting screen. If the user chooses the HD-auto clearing mode in this screen, the screen is changed to the screen of step S706.

The screen of step S706 is the screen for choosing either the " weekly setting" or the "monthly setting".

In this manner, the MFP 1200 provides the display indication, like the screen of step S706, on the operation panel 1310 according to the demand from the user, wherein the user is requested to set up the date and time at which the HD clearing process of the HD 1303 is automatically started.

And the MFP 1200 stores into the NVRAM 208 the information related to the date and time specified by the user beforehand. If the user chooses the "weekly setting" in the screen of step S706 and completes the setting of the date and time in the screen of step S707, the screen is changed to the screen of step S708.

If the user chooses the "restart operation after the HD clearing process" in this screen, the screen is changed to the screen of step S709.

Step S709 is the screen for choosing either the power ON or the power OFF. When the user chooses the power OFF, the screen is changed to the screen of step S710.

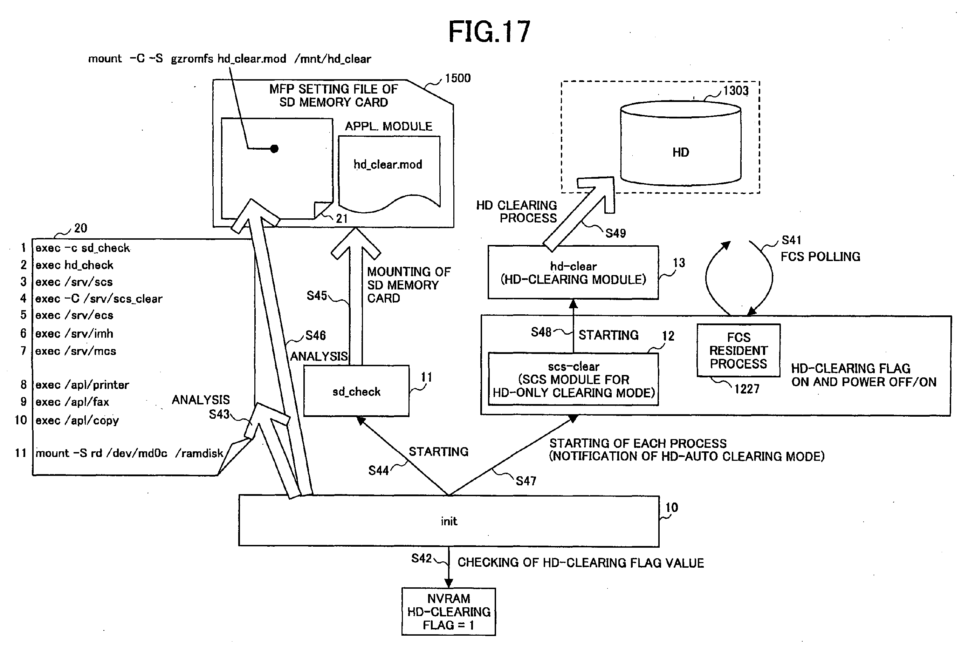

FIG. 17 is a diagram for explaining the operation of the MFP in the HD-auto clearing mode.

As shown in FIG. 17, at step S41, the FCS 1227 which is a resident process performs the polling and the fax reception, and checks the predetermined date and time by making reference to the NVRAM 208. If the FCS 1227 judges that the date and time which is specified by the user beforehand is reached, the FCS 1227 sets the value of the HD clearing flag of NVRAM 208 to "1", and turns the power of the MFP 1200 OFF and ON (restarting).

At step S42, the "init" 10 checks the value of the HD clearing flag of NVRAM 208. The "init" 10 will start the MFP 1200 in the HD-only clearing mode if the value of the HD clearing flag is 1.

At step S43 following step S42, the "init" 10 analyzes the MFP setting file 20. At step S44 following step S43, the "init" 10 performs the "exec" of the 1st line described in the MFP setting file 20 of FIG. 17, and starts the "sd_check" 11.

At step S45 following step S44, the "sd_check" 11 performs the mounting of the SD memory card 1500. At step S46 following step S45, the "init" 10 analyzes the SD memory card setting file 21, and performs the mounting.

On the other hand, at step S47, the "init" 10 performs the "exec" of the 4th line described in the MFP setting file 20 of FIG. 17, and starts the "scs_clear" 12. The "init" 10 passes a mode of operation as the option at the time of starting, to the process started at step S47.

At step S48 following step S47, the "scs_clear" 12 starts the "hd_clear" 13 which is the HD clearing process module.

At step S49 following step S48, the "hd_clear" 13 performs the HD clearing process related to the data stored in the HD 1303.

As shown in FIG. 16 and FIG. 17, the user can set up beforehand the date and time at which the HD clearing process is performed automatically. And if the predetermined date and time is reached, the MFP 1200 performs the erasing of the data in the HD 1303 automatically. Thus, the HD clearing of the data stored in the HD 1303 can be performed, for example, at midnight.

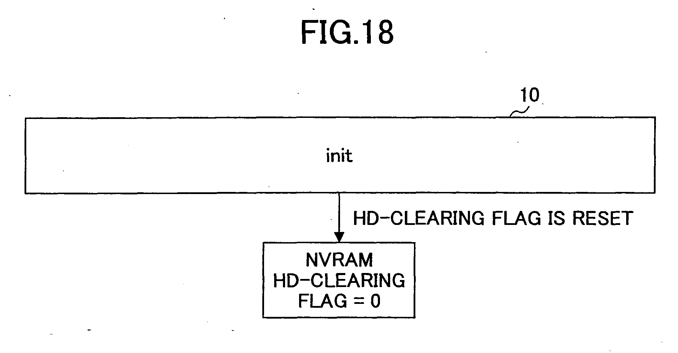

Next, an example of the operation of the MFP 1200 after the HD clearing process of HD 1303 will be explained using FIG. 18. FIG. 18 is a diagram for explaining the operation of the MFP after the HD clearing process is completed.

The "init" 10 of the MFP 1200 resets the value of the HD clearing flag of NVRAM 208 to "0" after the HD clearing process of HD 1303 is completed by the "hd_clear" 13.

The "init" 10 checks the value of the restart operation flag after the end of the HD clearing process. If the value of the restart operation flag after the HD clearing process is 1 and the MFP 1200 is started in the HD-safe clearing mode, the HD-only clearing mode or the HD-auto clearing mode, then the "init" 10 turns the power of the MFP 1200 OFF and ON.

Moreover, the "init" 10 turns the power of the MFP 1200 OFF if the value of the restart operation flag after the HD clearing process is checked and the value of the restart operation flag after the HD clearing process is zero.

As described above, after the HD clearing process of HD 1303 is completed by the "hd_clear" 13, the "init" 10 of the MFP 1200 resets the value of the HD clearing flag of NVRAM 208 to 0. Thus, the MFP 1200 will be subsequently started in the normal starting mode.

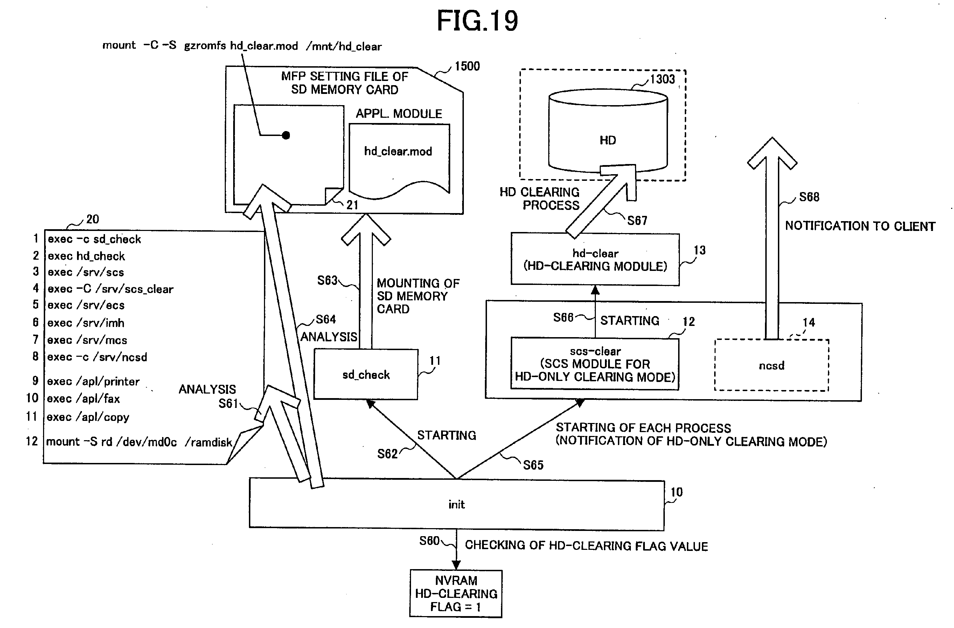

Next, an example of the operation which notifies the information related to the HD clearing of HD 1303 to the client which is connected with the MFP 1200 via the network will be explained using FIG. 19. FIG. 19 is a diagram for explaining the notification of the HD clearing mode to the client.

As shown in FIG. 19, at step S60, the "init" 10 checks the value of the HD clearing flag of NVRAM 208. The "init" 10 starts the MFP 1200 in the HD-only clearing mode if the value of the HD clearing flag is 1.

At step S61 following step S60, the "init" 10 analyzes the MFP setting file 20. At step S62 following step S61, the "init" 10 performs the "exec" of the 1st line described in the MFP setting file 20 of FIG. 19, and starts the "sd_check" 11.

At step S63 following step S62, the "sd_check" 11 performs the mounting of the SD memory card 1500. At step S64 following step S63, the "init" 10 analyzes the SD memory card setting file 21, and performs the mounting.

On the other hand, at step S65, the "init" 10 performs the "exec" of the 4th line and the 8th line described in the MFP setting file 20, and starts the "scs_clear" 12 and the "ncsd" 14 which provides a part of the function of the NCS 1228.

The "init" 10 passes a mode of operation as the option at the time of starting, to the process started at step S65.

At step S66 following step S65, the "scs_clear" 12 starts the "hd_clear" 13 which is the HD clearing process module.

At step S67 following step S66, the "hd_clear" 13 performs the HD clearing process related to the data stored in the HD 1303.

On the other hand, at step S68, the "ncsd" 14 notifies the information related to the HD clearing of HD 1303 to the client.

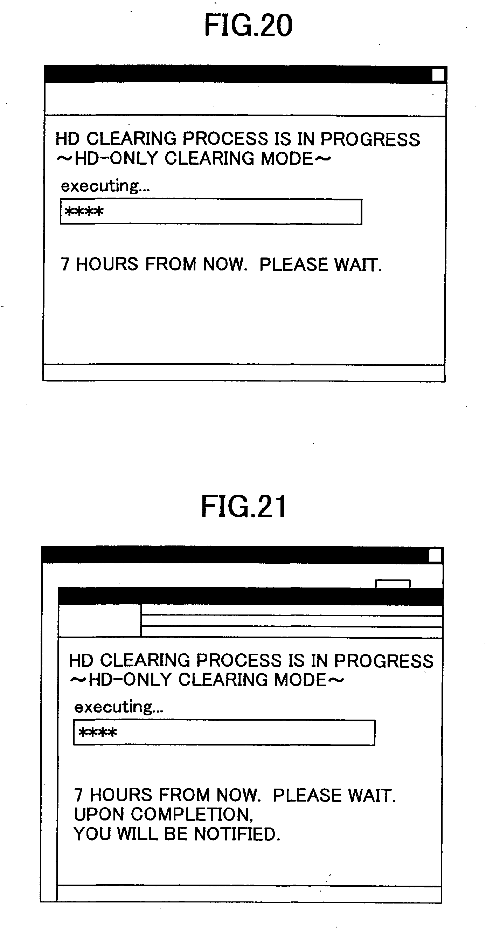

Next, an example of the information related to the HD clearing process which is displayed on the web browser of the client will be explained using FIG. 20. FIG. 20 is a diagram showing an example of the information related to the HD clearing process displayed on the web browser of the client.

For example, the MFP 1200 creates a Web page (screen) as shown in FIG. 20, and transmits the Web page to the client at step S68 of FIG. 19.

When the client displays the Web page as shown in FIG. 20 on the web browser, the user of the client can recognize how much time is needed for the completion of the HD clearing of HD 1303, and can recognize in which mode the MFP 1200 has started currently. Moreover, the user can understand that the power of the MFP 1200 must not be turned off, by viewing the Web page indicating that the HD clearing process of HD 1303 is now in progress.

Alternatively, the MFP 1200 may be configured so that a Web page is not created at the MFP 1200, but a communication between the MFP 1200 and the client is performed based on SOAP, and the information related to the HD clearing of HD 1303, described in the form of XML, is notified to the client. In such alternative embodiment, the screen shown in FIG. 20 may be created at the client, and the screen may be displayed on the web browser.

In the following, it is assumed, for simplification of explanation, that the MFP 1200 creates the Web page and outputs the Web page to the client. However, this does not restrict implementation of this invention.

Hereinafter, an example of the e-mail related to the HD clearing process which is transmitted from the MFP 1200 to the client will be explained using FIG. 21. FIG. 21 is a diagram showing an example of the e-mail related to the HD clearing process which is transmitted to the client.

The MFP 1200 creates the e-mail as shown in FIG. 21, and this e-mail is transmitted to the client at step S68 of FIG. 19.

By referring to the e-mail as shown in FIG. 21, the user of the client can recognize how much time is needed for the completion of the HD clearing of HD 1303. The user can recognize in which mode the MFP 1200 has started currently. By viewing the e-mail indicating that the HD clearing of HD 1303 is now in progress, the user can understand that the power of the MFP 1200 must not be turned off.

In the embodiment of FIG. 19, the notification of the information related to the HD clearing process to the client is performed in the HD-only clearing mode. However, the present invention is not limited to this embodiment. The notification to the client may be performed similarly in any mode other than the HD-only clearing mode.

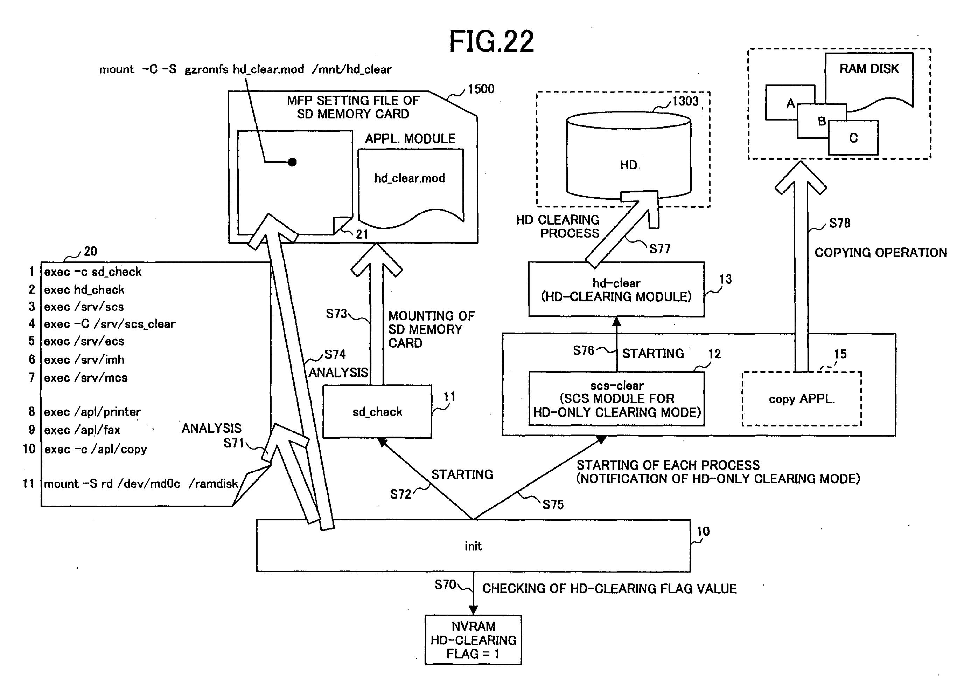

Next, another example of the operation of the MFP 1200 in the HD-only clearing mode will be explained using FIG. 22. FIG. 22 is a diagram for explaining the operation of the MFP in the HD-only clearing mode.

As shown in FIG. 22, at step S70, the "init" 10 checks the value of the HD clearing flag of NVRAM 208. The "init" 10 will start the MFP 1200 in the HD-only clearing mode if the value of the HD clearing flag is 1.

At step S71 following step S70, the "init" 10 analyzes the MFP setting file 20. At step S72 following step S71, the "init" 10 performs the "exec" of the 1st line described in the MFP setting file 20 of FIG. 22, and starts the "sd_check" 11.

At step S73 following step S72, the "sd_check" 11 mounts the SD memory card 1500. At step S74 following step S73, the "init" 10 analyzes the SD memory card setting file 21, and performs the mounting.

On the other hand, at step S75, the "init" 10 performs the "exec" of the 4th line and the 10th line described in the MFP setting file 20 of FIG. 22, and starts the "scs_clear" 12 and the copier application 15 which provide the function of the copier application 1212.

The "init" 10 passes a mode of operation as the option at the time of starting, to the process started at step S75.

At step S76 following step S75, the "scs_clear" 12 starts the "hd_clear" 13 which is the HD clearing process module. At step S77 following step S76, the "hd_clear" 13 performs the HD clearing process related to the data stored in the HD 1303.

On the other hand, at step S78, the copier application 15 accesses the RAM disk, instead of accessing the HD 1303, and provides the function of the copier application 1212. Even when the HD clearing process is in progress, only the copier function can be provided by performing the processing as shown in FIG. 22.

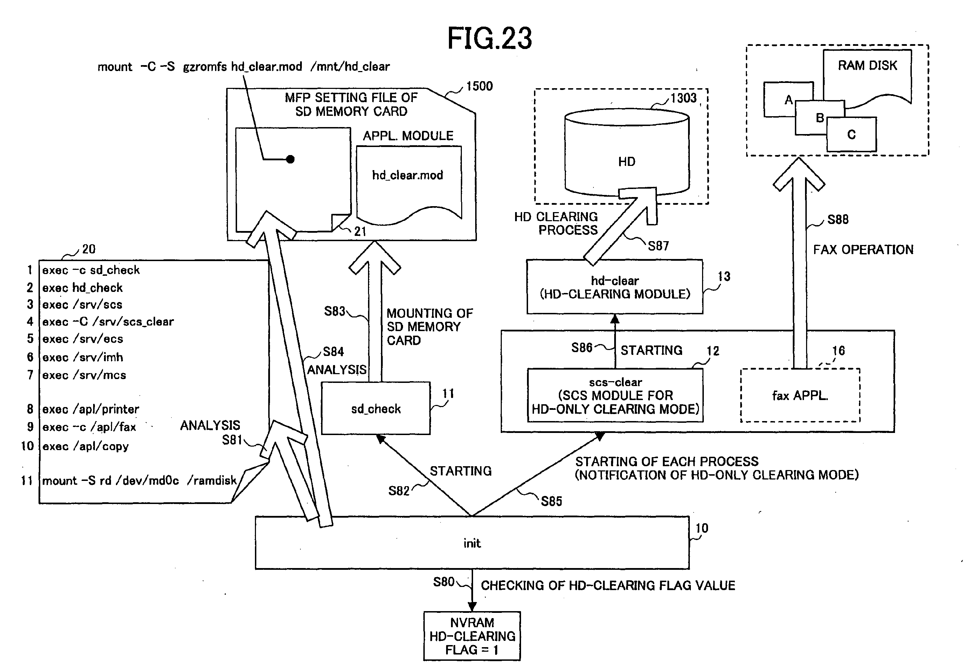

Next, another example of the operation of the MFP 1200 in the HD-only clearing mode will be explained using FIG. 23. FIG. 23 is a diagram for explaining the operation of the MFP in the HD-only clearing mode.

As shown in FIG. 23, at step S80, the "init" 10 checks the value of the HD clearing flag of NVRAM 208. The "init" 10 will start the MFP 1200 in the HD-only clearing mode if the value of the HD clearing flag is 1.

At step S81 following step S80, the "init" 10 analyzes the MFP setting file 20. At step S82 following step S81, the "init" 10 performs the "exec" of the 1st line described in the MFP setting file 20 of FIG. 23, and starts the "sd_check" 11.

At step S83 following step S82, the "sd_check" 11 performs the mounting of the SD memory card 1500.

At step S84 following step S83, the "init" 10 analyzes the SD memory card setting file 21, and performs the mounting.

On the other hand, at step S85, the "init" 10 performs the "exec" of the 4th line and the 9th line described in the MFP setting file 20 of FIG. 23, and starts the "scs_clear" 12 and the fax application 16 which offers the function of the fax application 1213.

The "init" 10 passes a mode of operation as the option at the time of starting, to the process started at step S85.

At step S86, the "scs_clear" 12 starts the "hd_clear" 13 which is the HD clearing process module.

At step S87, the "hd_clear" 13 performs the HD clearing process related to the data stored in the HD 1303.

On the other hand, at step S88, the fax application 16 accesses the RAM disk, instead of accessing the HD 1303, and the function which is provided by the fax application 1213 is provided.

Even when the HD clearing process is in progress, only the fax function can be provided by performing the processing as shown in FIG. 23.

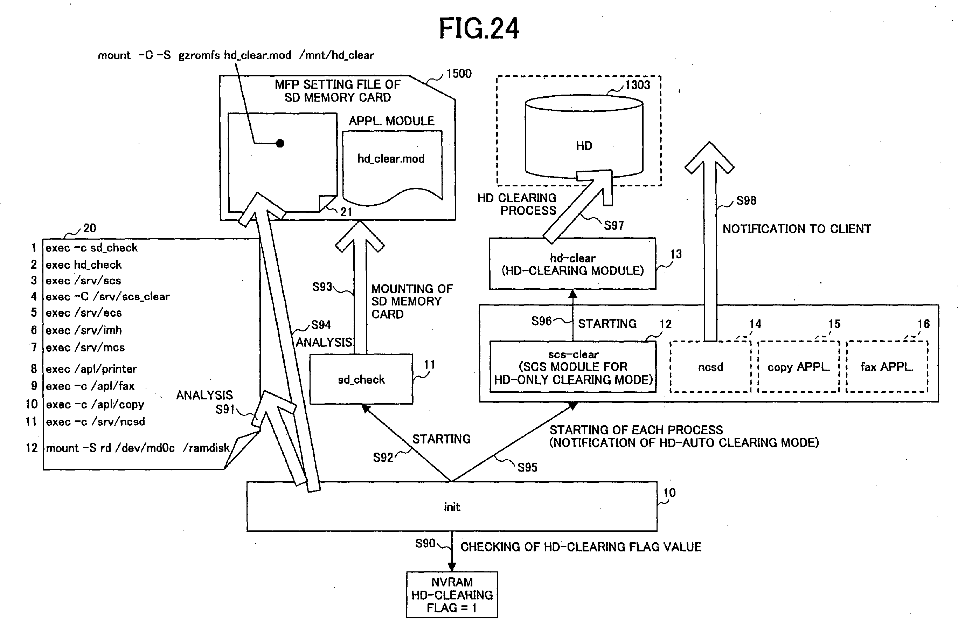

Next, another example of the operation of the MFP 1200 in the HD-only clearing mode will be explained using FIG. 24. FIG. 24 is a diagram for explaining the operation of the MFP in the HD-only clearing mode.

As shown in FIG. 24, at step S90, the "init" 10 checks the value of the HD clearing flag of NVRAM 208. The "init" 10 will start the MFP 1200 in the HD-only clearing mode if the value of the HD clearing flag is 1.

At step S91, the "init" 10 analyzes the MFP setting file 20. At step S92, the "init" 10 performs "exec" of the 1st line described in the MFP setting file 20 of FIG. 24, and starts the "sd_check" 11.

At step S93, the "sd_check" 11 performs the mounting of the SD memory card 1500. At step S94, the "init" 10 analyzes the SD memory card setting file 21, and performs the mounting.

On the other hand, at step S95, the "init" 10 performs the "exec" of the 4th line, the 9th line, the 10th line, and the 11th line described in the MFP setting file 20 of FIG. 24, and starts the "scs_clear" 12, the copier application 15, the fax application 16, and the "ncsd" 14.

The "init" 10 passes a mode of operation as the option at the time of starting, to the processes started at step S95.

At step S96, the "scs_clear" 12 starts the "hd_clear" 13 which is the HD clearing process module.

At step S97 following step S96, the "hd_clear" 13 performs the HD clearing process related to the data stored in the HD 1303.

On the other hand, at step S98, the "ncsd" 14 notifies the information related to the usable functions, to the client.

Similar to FIG. 22 and FIG. 23, the copier application 15 and the fax application 16, shown in FIG. 24, access the RAM disk, instead of accessing the HD 1303, and these applications provide the functions of the copier application 1212 and the fax application 1213.

By performing the processing as shown in FIG. 24, even when the erasing of the HD data is in progress, it is possible that only the applications which do not use the HD 1303 are started and the information related to the usable functions is notified to the client.

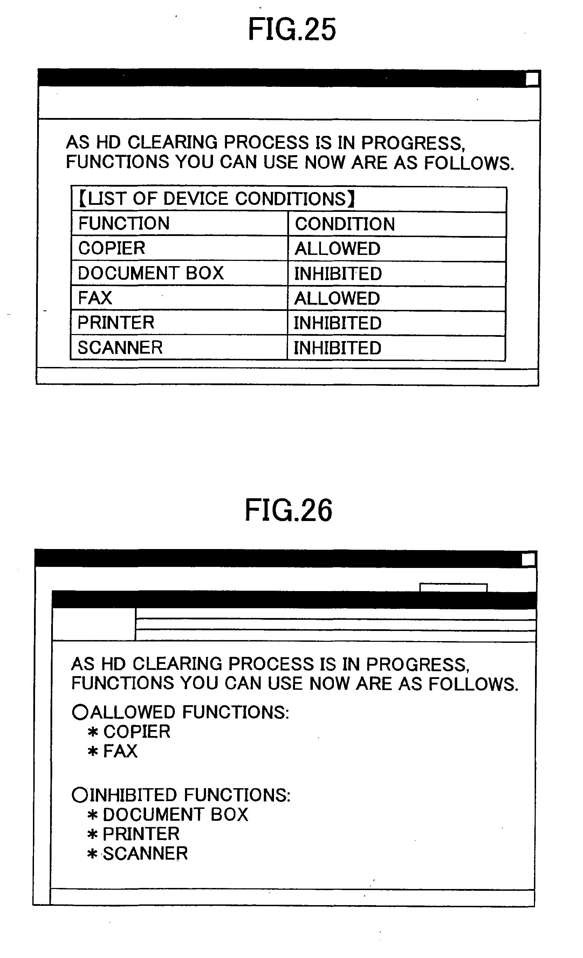

Next, an example of the information related to the usable functions which is displayed on the web browser of the client will be described using FIG. 25. FIG. 25 shows an example of the information related to the usable functions displayed on the web browser of the client.

In this embodiment, the MFP 1200 creates a Web page (screen) as shown in FIG. 25 and transmits to the client the Web page at step S98 of FIG. 24.

When the client displays the received Web page on the web browser as shown in FIG. 25, the user of the client can recognize the usable functions which the user can use even when the HD clearing process is in progress.

Next, an example of the e-mail related to the usable functions which is transmitted to the client by the MFP 1200 will be explained using FIG. 26. FIG. 26 shows an example of the e-mail related to the usable functions which is transmitted to the client.

In this embodiment, the MFP 1200 creates an e-mail as shown in FIG. 26 and transmits to the client the e-mail at step S98 of FIG. 24.

By referring to the e-mail shown in FIG. 26, the user of the client can recognize the usable functions which the user can use even when the HD clearing process is in progress.

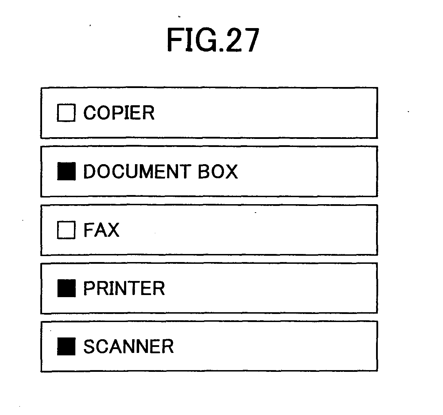

Next, an example of the function buttons related to the usable functions displayed on the client will be explained using FIG. 27. FIG. 27 shows an example of the function buttons related to the usable functions displayed on the client.

In this embodiment, the MFP 1200 creates function buttons as shown in FIG. 27 and transmits the function buttons to the client at step S98 of FIG. 24.

When the function buttons as shown in FIG. 27 are displayed on the client, the user of the client can recognize the usable functions which the user can use even when the HD clearing process is in progress. The user of the client can make use of the functions of the MFP 1200 by clicking any of the function buttons which are displayed as being the usable functions.

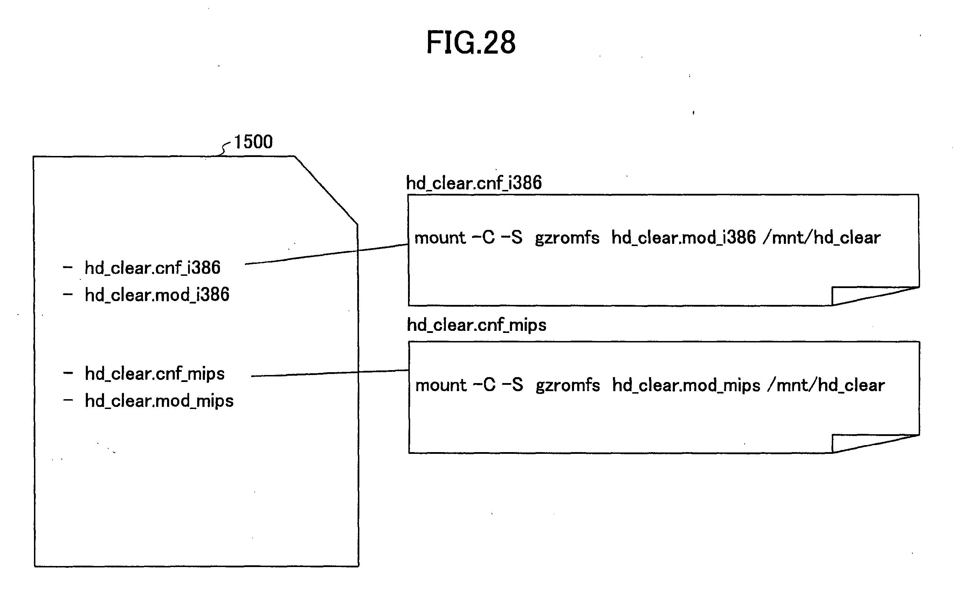

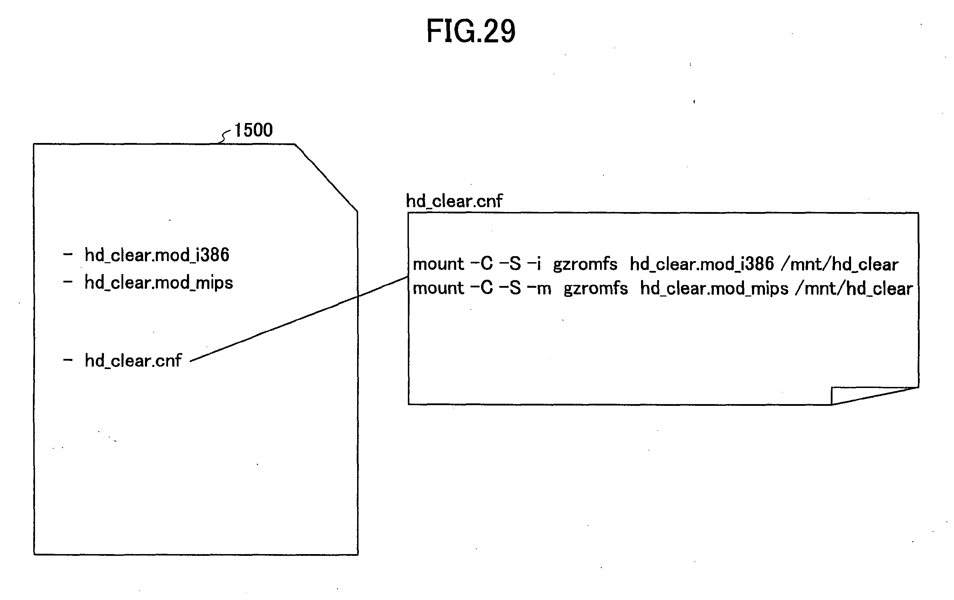

Next, the model common SD memory card which does not depend upon the CPU architecture (x86/MIPS) currently used in the models of the MFP 1200 will be explained using FIG. 28 and FIG. 29.

FIG. 28 is a diagram showing the configuration of the model common SD memory card.

As shown in FIG. 28, with the use of the file name (*_i386, *_mips), the configuration as to whether the reading of the MFP setting file (cnf file) and the execution or mounting of the application module (mod file) should be performed is set up. It is possible to provide the model common SD memory card regardless of the CPU architecture.

FIG. 29 is a diagram showing the configuration of the model common SD memory card.

As shown in FIG. 29, with the use of the option (- i, -m) of the "exec" or "mount" command, the configuration as to whether the execution or mounting of the application module (mod file) should be performed is set up. It is possible to provide the model common SD memory card regardless of the CPU architecture.

As shown in FIG. 28 and FIG. 29, by providing the model common SD memory card regardless of the CPU architecture, the user can make use of the model common SD memory card without depending upon the CPU architecture, and the usability of the MFP improves.

As mentioned above, according to the present invention, the erasing of the data in the HD 1303 can be safely and efficiently performed.

Next, another preferred embodiment of the invention in which the program module for the HD clearing process is stored in the ROM will be explained.

Since the composition of the image forming device in this embodiment is essentially the same as that of the previous embodiment, a description thereof will be omitted. In this embodiment, the elements which are the same as corresponding elements in the previous embodiment are designated by the same reference numerals, and a description thereof will be omitted.

By storing the HD clearing process module in the ROM, mounting processing of the "sd_check" and the SD card which has been explained in the previous embodiment becomes unnecessary.

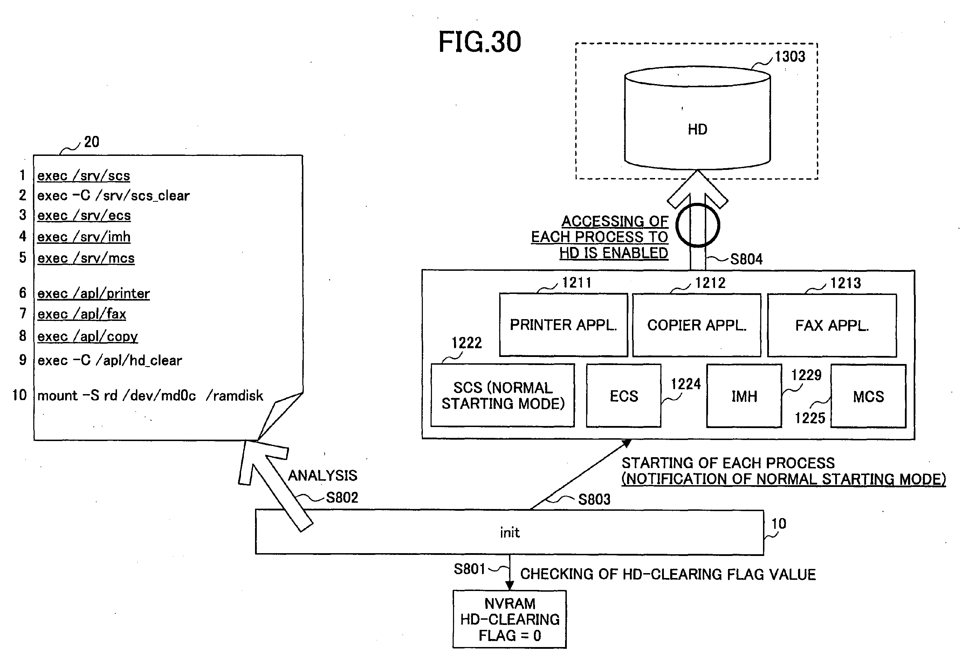

Next, the operation of the MFP in the normal starting mode will be explained using FIG. 30. FIG. 30 is a diagram for explaining the operation of the MFP in the normal starting mode.

As shown in FIG. 30, at step S801, the "init" 10 checks the value of the HD clearing flag of NVRAM 208. The "init" 10 will start the MFP 1200 in the normal starting mode if the value of the HD clearing flag is 0.

At step S802, the "init" 10 analyzes the MFP setting file 20. The "exec" of the lines currently underlined among the lines described in the MFP setting file 20 of FIG. 30 are performed.

At step S803, the SCS 1222 for the normal starting mode, the ECS 1224, the IMH 1229, the MCS 1225, the printer application 1211, the copier application 1212, and the fax application 1213 are started.

At step S804, according to the processing concerned, each process accesses the HD 1303, and the processing is performed.

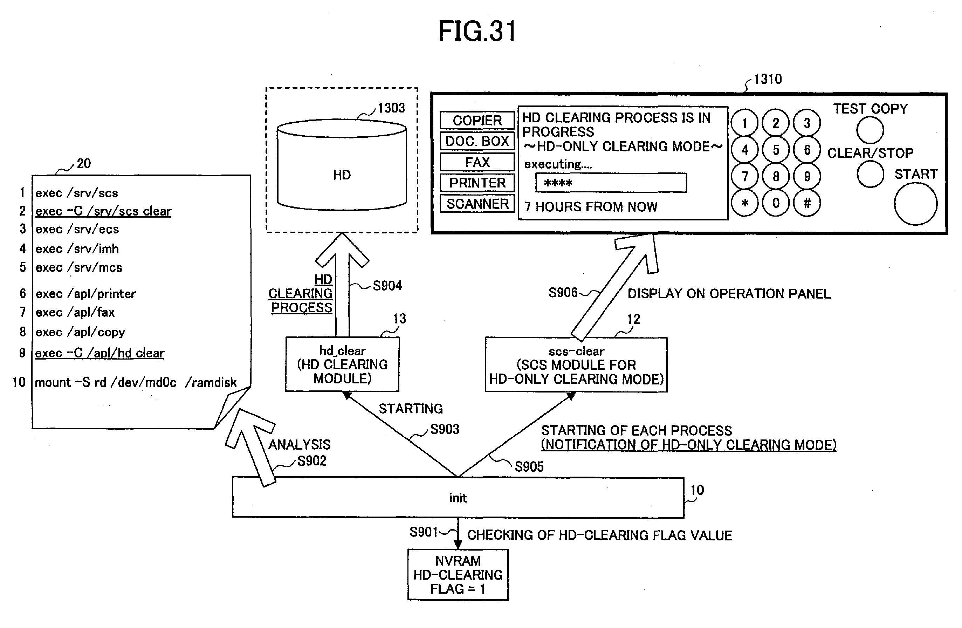

Next, an example of the operation of the MFP 1200 in the HD-only clearing mode will be explained using FIG. 31. FIG. 31 is a diagram for explaining the operation of the MFP in the HD-only clearing mode.

As shown in FIG. 31, at step S901, the "init" 10 checks the value of the HD clearing flag of NVRAM 208. The "init" 10 will start the MFP 1200 in the HD-only clearing mode if the value of the HD clearing flag is 1.

At step S902, the "init" 10 analyzes the MFP setting file 20. The "exec" of the lines currently underlined among the lines described in the MFP setting file 20 of FIG. 31 are performed.

At step S903, the "init" 10 performs the "hd_clear" 13. And the HD clearing process of the HD is performed at step S904.

On the other hand, at step S905, the "init" 10 starts the "scs_clear" 12 which is the SCS for the HD-only clearing mode.

At step S906, the "scs_clear" 12 outputs the display indication to the operation panel 1310. The operation panel 1310 in this case provides a display indication in the case of displaying the remaining time.

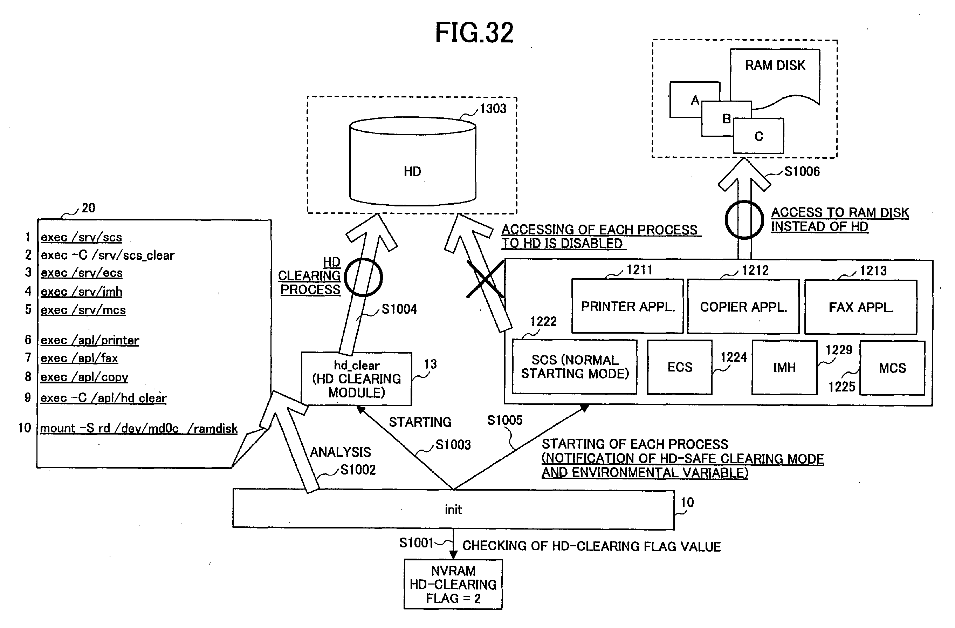

Next, the operation of the MFP 1200 in the HD-safe clearing mode will be explained using FIG. 32. FIG. 32 is a diagram for explaining the operation of the MFP in the HD-safe clearing mode.

As shown in FIG. 32, at step S1001, the "init" 10 checks the value of the HD clearing flag of NVRAM 208. The "init" 10 will start the MFP 1200 in the HD-safe clearing mode if the value of the HD clearing flag is 2.

At step S1002, the "init" 10 analyzes the MFP setting file 20. The "exec" of the lines currently underlined among the lines described in the MFP setting file 20 of FIG. 32 are performed.

At step S1003, the "init" 10 starts the "hd_clear" 13. And the HD clearing process of the HD is performed at step S1004.

On the other hand, at step S1005, the "init" 10 starts the SCS 1222 for the normal starting mode, the ECS 1224, the IMH 1229, the MCS 1225, the printer application 1211, the copier application 1212, and the fax application 1213 respectively. Moreover, the "init" 10 performs the "mount" of the 10th line described in the MFP setting file 20, so that the mounting of the RAM disk of SDRAM 203 is performed. And the started process accesses the RAM disk, instead of accessing the HD 1303, and performs the image-formation processing related to the printer, the copier, the fax or the scanner.

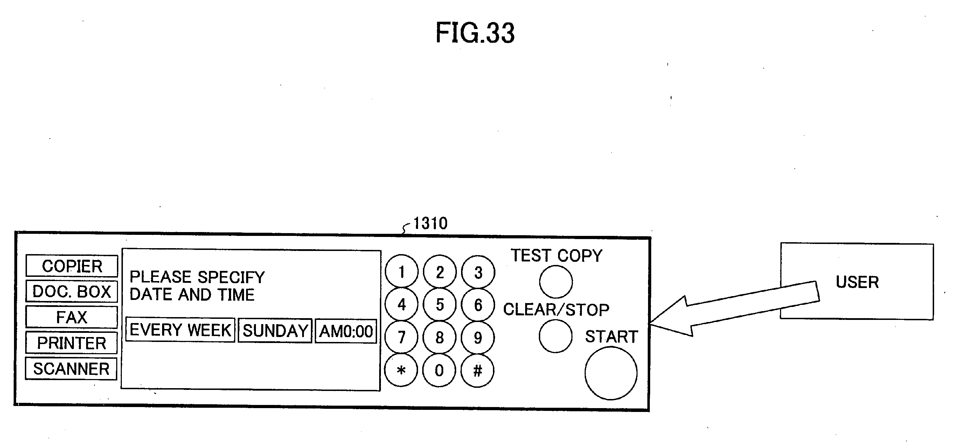

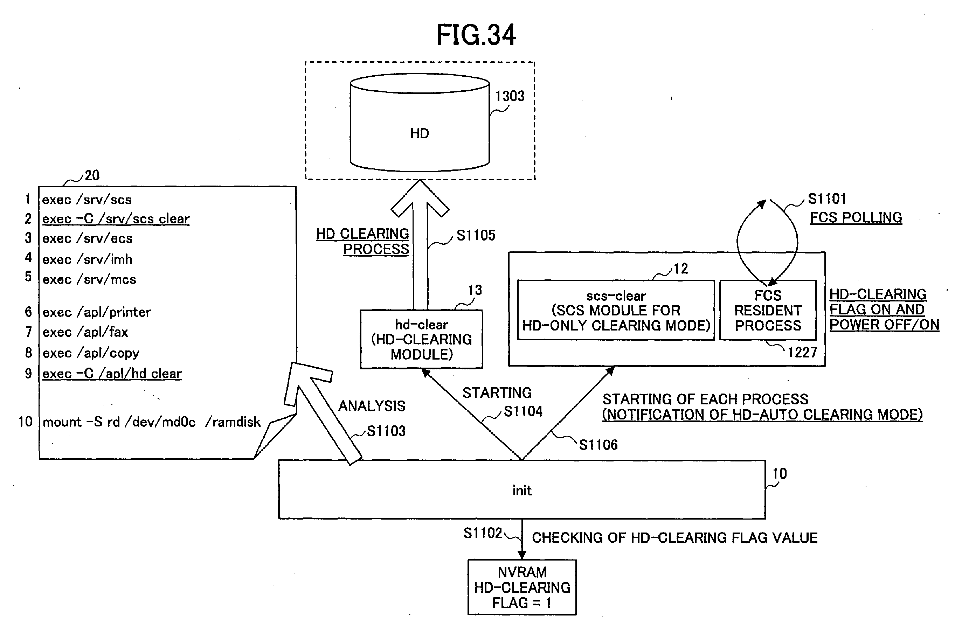

FIG. 33 and FIG. 34 are diagrams for explaining the operation of the MFP in the HD-auto clearing mode.

As shown in FIG. 33, the user specifies the date and time at which the erasing of the data in the HD 1303 should be performed automatically, from the operation panel 1310. The operation panel 1310 provides a display indication in the case of starting of the HD data erasing at 0:00 a.m. (midnight) every Sunday.

As shown in FIG. 34, at step S1101, the FCS 1227 which is a resident process performs the polling and the fax reception, and checks the predetermined date and time by making reference to the NVRAM 208. If the FCS 1227 judges that the date and time which is specified by the user is reached, the FCS 1227 sets the value of the HD clearing flag of NVRAM 208 to "3", and turns the power of the MFP 1200 off and on.

At step S 1102, the "init" 10 checks the value of the HD clearing flag of NVRAM 208. The "init" 10 will start the MFP 1200 in the HD-auto clearing mode if the value of the HD clearing flag is 3.

At step S1103, the "init" 10 analyzes the MFP setting file 20. The "exec" of the lines currently underlined among the lines described in the MFP setting file 20 of FIG. 34 are performed.

At step S 1104, the "init" 10 starts the "hd_clear" 13. And the HD clearing process of the HD is performed at step S1105.

On the other hand, at step S 1106, the "init" 10 starts the "scs_clear" 12 which is the SCS for the HD-only clearing mode.

In the above-mentioned embodiment, the option of the argument of "exec" must be specified beforehand in the MFP setting file in the processing concerned.

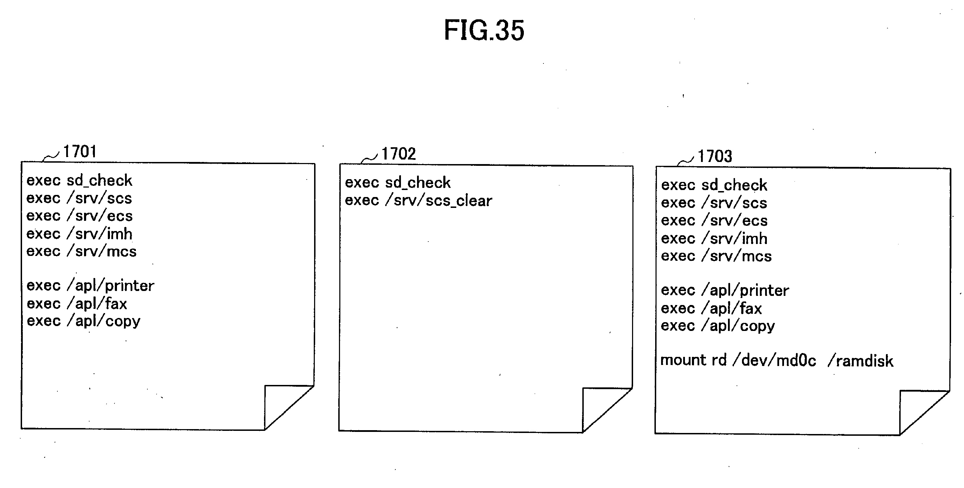

FIG. 35 is a diagram showing an example of the setting file which makes the setting of the option unnecessary.

The setting file 1701 is a configuration file in the case of the normal starting mode. The setting file 1702 is a configuration file in the case of the HD-only clearing mode or the HD-auto clearing mode. The setting file 1703 is a configuration file in the case of the HD-safe clearing mode. Setting the option of the argument of "exec" beforehand is unnecessary as shown in these setting files. When setting the option is made unnecessary, the "init" 10 judges which setting file should be read from among the above setting files according to the starting mode.

The present invention is not limited to the above-described embodiments, and variations and modifications may be made without departing from the scope of the present invention.

## Claims

1. An image forming device including hardware resources for image-formation processing, and a program for executing an image-formation-related process,
**characterized in that** the image forming device comprises:
a mode judgment unit determining whether the image forming device is to be started in a clearing mode or a normal starting mode, the clearing mode being configured to erase, when the image forming device is started, data stored in a storage device of the image forming device;
a process starting unit starting execution of the image-formation-related process in response to both a result of the determination of the mode judgment unit and an image-forming-device setup data; and
a data erasing unit erasing the data stored in the storage device when the image forming device is started in the clearing mode.

2. An image forming device according to claim 1 wherein the clearing mode comprises an only clearing mode which is configured to start execution of only processes needed to erase the data stored in the storage device.

3. An image forming device according to either claim 1 or claim 2 wherein the clearing mode comprises a safe clearing mode which is configured to perform the erasing of the data also when the image-formation-related process is performed.

4. An image forming device according to claim 3 wherein, when the image forming device is started in the safe clearing mode, the image-formation-related process accesses a temporary storage medium instead of accessing the storage device.

5. An image forming device according to any one of the preceding claims wherein the clearing mode comprises an auto clearing mode which is configured to perform the erasing of the data automatically when a predetermined date and time is reached.

6. An image forming device according to any one of the preceding claims wherein the data erasing unit operates according to a program recorded in a computer-readable recording medium which is loaded in the image forming device.

7. An image forming device according to any one of the preceding claims further comprising an erasing-related information output unit outputting erasing-related information which is related to the erasing of the data stored in the storage device.

8. An image forming device according to claim 7 wherein the clearing mode comprises an only clearing mode which is configured to start execution of only processes needed to erase the data stored in the storage device.

9. An image forming device according to any one of the preceding claims wherein the clearing mode comprises a safe clearing mode which is configured to perform the erasing of the data also when the image-formation-related process is performed.

10. An image forming device according to any one of the preceding claims wherein the clearing mode comprises an auto clearing mode which is configured to perform the erasing of the data automatically when a predetermined date and time is reached.

11. An image forming device according to claim 10 wherein the erasing-related information comprises information related to the predetermined date and time.

12. An image forming device according to either claim 10 or claim 11 further comprising a time setting unit setting the date and time at which the erasing of the data is automatically performed.

13. An image forming device according to any one of claims 7 to 12 wherein the erasing-related information comprises a remaining time related to the erasing of the data.

14. An image forming device according to any one of claims 7 to 13 wherein the erasing-related information output unit is configured to transmit the erasing-related information to a client which is connected with the image forming device via a network.

15. A data erasing method for an image forming device which includes hardware resources for image-formation processing, and a program for executing an image-formation-related process,
**characterized in that** the data erasing method comprises steps of:
determining whether the image forming device is to be started in a clearing mode or a normal starting mode, the clearing mode being configured to erase, when the image forming device is started, data stored in a storage device of the image forming device;
starting execution of the image-formation-related process in response to both a result of the determination of the mode judgment unit and an image-forming-device setup data; and
erasing the data stored in the storage device when the image forming device is started in the clearing mode.

16. A data erasing method according to claim 15 wherein the clearing mode comprises an only clearing mode which is configured to start execution of only processes needed to erase the data stored in the storage device.

17. A data erasing method according to either claim 15 or claim 16 wherein the clearing mode comprises a safe clearing mode which is configured to perform the erasing of the data also when the image-formation-related process is performed.

18. A data erasing method according to claim 17 wherein, when the image forming device is started in the safe clearing mode, the image-formation-related process accesses a temporary storage medium instead of accessing the storage device.

19. A data erasing method according to any one of claims 15 to 18 wherein the clearing mode comprises an auto clearing mode which is configured to perform the erasing of the data automatically when a predetermined date and time is reached.

20. A data erasing method according to any one of claims 15 to 19 comprising a step of outputting erasing-related information which is related to the erasing of the data stored in the storage device.

21. A data erasing method according to claim 22 wherein the clearing mode comprises an only clearing mode which is configured to start execution of only processes needed to erase the data stored in the storage device.

22. A data erasing method according to any one of claims 15 to 21 wherein the clearing mode comprises a safe clearing mode which is configured to perform the erasing of the data also when the image-formation-related process is performed.

23. A data erasing method according to any one of claims 15 to 22 wherein the clearing mode comprises an auto clearing mode which is configured to perform the erasing of the data automatically when a predetermined date and time is reached.

24. A data erasing method according to claim 23 wherein the erasing-related information comprises information related to the predetermined date and time.

25. A data erasing method according to either claim 23 or claim 24 further comprising a step of setting the date and time at which the erasing of the data is automatically performed.

26. A data erasing method according to any one of claims 20 to 25 wherein the erasing-related information comprises a remaining time related to the erasing of the data.

27. A data erasing method according to any one of claims 20 to 26 wherein the step of outputting the erasing-related information is configured to transmit the erasing-related information to a client which is connected with the image forming device via a network.

28. A computer program comprises program code means that, when executed on a computer system instructs a system to carry out the steps according to any one of claims 15 to 27.

29. A computer readable storage medium having recorded thereon program code means that, when executed on a computer system, instructs a system to carry out steps according to any one of claims 15 to 27.
